# EUROPEAN PATENT SPECIFICATION

(11) **EP 3 728 464 B1**
(45) Date of publication and mention of the grant of the patent: **08.03.2023**
(21) Application number: 18822079.2
(22) Date of filing: 20.12.2018
(51) Int. Cl.: C08L 51/04, C08L 25/12, C08L 69/00, F03D 1/06, F03D 80/50, B29C 73/04

(54) **REPAIR AND ASSEMBLY PART OF A WIND TURBINE BLADE**
REPARATUR UND MONTAGETEIL EINER WINDTURBINENSCHAUFEL
PIÈCE DE RÉPARATION ET D'ASSEMBLAGE D'UNE PALE D'ÉOLIENNE

(30) Priority: 21.12.2017 EP 17209255
(43) Date of publication of application: 28.10.2020
(73) Proprietor: INEOS Styrolution Group GmbH, 60325 Frankfurt (DE)
(72) Inventor: WILHELMUS, Bianca, 63456 Hanau (DE); NIESSNER, Norbert, 67159 Friedelsheim (DE); EISENTRÄGER, Frank, 50996 Köln (DE); MACINTOSH, Ken, Largs KA30 8TH (GB); FORBES, Brian, Edinburgh EH1 2AS (GB)
(74) Representative: Jacobi, Markus Alexander
(86) International application number: PCT/EP2018/086155
(87) International publication number: WO 2019/122103

(56) References cited:
- EP-A1- 2 692 519
- WO-A1-2016/079535
- WO-A1-2017/012632
- CN-A- 1 424 349
- US-A1- 2015 240 085

## Description

The present invention relates to a polymer part P of a wind turbine blade (W) and to a method for preparing a polymer part P comprising extrusion of a sheet followed by thermoforming, injection molding, rotational molding, extrusion blow molding, 3D printing, pressure forming, vacuum forming, drape forming, or a combination of two or more thereof.

The polymer part P of a wind turbine blade (W) comprises: (I) a thermoplastic component containing a thermoplastic copolymer matrix A including optionally substituted styrene and acrylonitrile and a graft copolymer B containing a graft base comprising C₁-C₈-alkyl(meth)acrylate and a graft shell, (II) optionally one or more fibers that may optionally react with the copolymer matrix A, (III) optionally one or more polycarbonates, and optionally one or more further components. Further, the invention refers to methods for preparing such polymer part P in a system for protecting and/or repairing a wind turbine blade (W) and a kit for this purpose. There is a worldwide tendency for transition of energy sources from fossil fuels to sustainable and renewable energy sources. One of the most promising sustainable energy sources is exploiting wind energy, i.e., converting the wind's kinetic energy into electrical power. Therefore, an increasing number of wind turbines are installed in numerous countries throughout the world.

Unfortunately, many construction components of wind turbines, in particular wind turbine blades, are prone to damages due to erosion. In contrast, to other construction components of wind turbines, blades bear an outer surface that is subjected to particularly harsh atmospheric exposure mechanical agitation when rotating. Wind turbines are exposed to a number of environmental influences such as, e.g., harsh weather conditions (also: environmental conditions) and mechanical stress. Such blades are exemplarily subjected to mechanical strikes by particulates such as, e.g., hailstones, raindrops, sand grains, birds, insects, plant parts, etc., lightning strikes, dust, moisture, frost, heat, UV-irradiation, salt laden air, etc. In particular the tip region of a wind turbine blade is exposed to high circular/rotational velocity that increases mechanical stress such as mechanical strikes.

In particular, the tip region of the leading edge (LE) is often subjected to significant mechanical stress, in the case of longer blades the tips can be travelling in excess of 300 km/h. Even raindrops may reach velocities upon hit of more than 100 m/s and thus may have an impact of surface stability (cf., Keegan et al., "On erosion issues associated with the leading edge of wind turbine blades", Journal of Physics D, Applied Physics, 2013, 46(38)).

Further, material fatigue is found that may be due to mechanical stress such as vibrations and turbulence of the wind turbine blade. Damages may for instance base on the impact of particulates serving as projectiles penetrating, notching or cracking the outer surface of the wind turbine blade. Further, the outer surface of the wind turbine blade may also spall due to other reasons such as the material becoming brittle and/or debonding of the material with itself or with lower layers of the wind turbine blade interior. Even without actual damage, the surface is often becoming rough due to minor pitting and particle accretion. This may decrease the aerodynamic performance of the wind turbine blade.

Wind turbine blade damage may also result in the requirement to complete repairs, which are typically categorized on a scale from 1-5, where category 1 damage is superficial, and category 5 damage necessitates the wind turbine to be shut down. Repeated repairs may necessitate successive removal of damaged wind turbine blade material before the surface is restored and paint, gel coat or some other form of leading edge protection is applied, therefore repeated repairs of a higher category will typically necessitate greater material removal. It has been found that repeated repairs often ultimately compromise the structural integrity of the wind turbine blade. This can potentially result in failure of the wind turbine blade. Notably, particularly the leading edge of a wind turbine blade is exposed to significant mechanical stress and further erosive influences. There are various types of damages such as spots, cavities and notches. Furthermore, the connection between an outer layer and the interior of a wind turbine blade may be disturbed. Examples of damages are further laid out in a review of Shohag et al. ("Damage mitigation techniques in wind turbine blades: A review", Wind Engineering, 2017, 41(3):185-210).

WO 2016/079535 teaches methods and apparatuses for turbine blade repair and focuses on the steps of mounting of repair parts. WO 2017/012632 teaches a wind turbine blade having an erosion shield, which can be composed various polymeric materials.US-A 2015/240085 teaches non-aqueous coating materials comprisiing polyhydroxyl and (per)fluoroalkyl group-containing (meth)acrylate and polyisocyanate group-containing compounds.

In view of the above, there are several attempts to prepare wind turbine blades that bear a higher stability against environmental influences and a number of attempts to provide means for repairing damaged wind turbine blades.

The wind turbine blade often features a coating that is intended to protect the exterior against environmental influences (WO 2008/157013; Keegan et al., "On erosion issues associated with the leading edge of wind turbine blades", Journal of Physics D, Applied Physics, 2013, 46(38); Shohag et al., "Damage mitigation techniques in wind turbine blades: A review", Wind Engineering, 2017, 41(3):185-210). Often, polyurethane coatings are used for this purpose.

UV-curable resin has been described as means for spot repair (cf., Marsh, "Meeting the challenge of wind turbine blade repair", Reinforced Plastics, 2011, 55(4):32-36).

It is described that a prepreg patch may be rolled into a damaged patch, a paste may be squeezed thereon and the surface may finally be polished and cured by a UV light. Repair films or tapes for overlocking damaged portions are described e.g. in WO 2008/157013. Moreover, leading edge tapes to protect the leading edge (leading edge protection (LEP)) composed of polyurethane are described (Keegan et al., "On erosion issues associated with the leading edge of wind turbine blades", Journal of Physics D, Applied Physics, 2013, 46(38)). It is a drawback of such tapes that these, due to their thickness, typically generate a step, i.e., an abrupt change of geometry from one plane to another, of several hundredths of a micrometer/millimeter, typically 300 microns/0.3 mm. This may significantly impair aerodynamic performance of the wind turbine blade and thus may reduce efficacy of the wind turbine. It is assumed that, depending on the localization of the wind turbine, this might result in a reduction in yield or annual energy production (AEP) of up to several percent. Furthermore, once mounted, it is sometimes comparably difficult to remove such tape again when it is damaged or worn. Unfortunately, it is however typically required to replace the whole tape or at least large parts thereof, in particular as the perimeter of a patch joint will typically be subject to a higher degree of erosion.

As a further alternative, exchanging damaged portions against prefabricated portions is described e.g. in WO 2016/079535. Also plastic welding processes for conjugating the repair part with the rest of a wind turbine blade are generally described e.g. in WO 2017/012632.

The materials used have either insufficient mechanical properties, are hard to handle, expensive and/or bear a poor stability when being exposed to environmental influences for longer time. For instance polyurethane, polyesters and epoxides are used. Also, composites including polyester and epoxy as matrix and glass and carbon fibers as reinforcing material have been described. These materials do however not bear desired material stability, in particular when exposed to harsh weather conditions. There is still the need for polymer parts of a wind turbine blades which are weather-resistant and, concomitantly, mechanically stable, easy to handle and economic.

Such coating and repair materials known in the art bear several technically undesired properties. Exemplarily, such materials like polyurethane-based materials show undesired electrostatic charging and discharging events, in particular during extended periods of dry and warm weather. Polyurethane bears a comparably high tendency to attract electrons when brought into contact with other materials, while being non-conductive.

This may lead to its undesired charging effects that may discharge upon formation of lightning and a higher frequency of lightning strikes to the wind turbine blades, respectively. This can harm the surface. The materials often serve as electrostatic antagonists. Thus, there can sometimes be a rather high frequency of lightning strikes in wind turbines comprising such coatings. It will be understood that lightning strikes can severely harm the wind turbines. Furthermore, many of the materials known in the art show rather poor weather stability and thus cause comparably high maintenance efforts.

Surprisingly, it has been found that a polymer part of a wind turbine blade (W) comprising 20 to 100 wt.-% (also: weight percent, percent by weight) of a thermoplastic component comprising a thermoplastic copolymer matrix including optionally substituted styrene and acrylonitrile and a graft copolymer containing a graft base comprising C₁-C₈-alkyl(meth)acrylate and a graft shell provides particularly beneficial properties, in particular when it bears the properties as laid out below. Such polymer part is weather-resistant and, concomitantly, mechanically stable, easy to handle and economic. Further, it is typically not such string electrostatic antagonists such as, e.g., polyurethane.

Generally taught is a polymer part P of a wind turbine blade (W) comprising (or consisting of):
(I) 20 to 100 wt.-% of a thermoplastic component T comprising (or consisting of):
   (A) 10 to 90 wt.-% of at least one thermoplastic copolymer matrix A comprising:
      (A1) 50 to 95 wt.-%, related to the thermoplastic copolymer matrix A, of at least one monomer selected from styrene and alpha-methylstyrene; and
      (A2) 5 to 50 wt.-%, related to the thermoplastic copolymer matrix A, of at least one monomer selected from acrylonitrile and monomers bearing a functional group M-I; and
   (B) 10 to 90 wt.-% of at least one graft copolymer B comprising (or consisting of):
      (B1) at least one graft base B1 having a glass transition temperature Tg below - 20°C, wherein the graft base B1 comprises at least one C₁-C₈-alkyl(meth)acrylate as monomer B11; and optionally one or more poly-functional cross-linking monomers B12; and
      (B2) at least one graft shell B2 comprising (or consisting of) at least one monomer B21 selected from the group consisting of styrene, alpha-methylstyrene, C₁-C₈-alkyl(meth)acrylate, and mixtures of styrene and at least one further monomer selected from the group consisting of alpha-methylstyrene, p-methylstyrene and
      C₁-C₈-alkyl(meth)acrylate; and optionally one or more further monomers B22 selected from the group consisting of acrylonitrile and mixtures of acrylonitrile and at least one further monomer selected from the group consisting of:
         methacrylonitrile, acrylamide, methyl vinyl ether, anhydrides of unsaturated carboxylic acids and imides of unsaturated carboxylic acids;
(II) 0 to 80 wt.-% of one or more fibers F, optionally comprising at their surface, a functional group G-I forming a covalent bond with the functional group M-I of a monomer A2;
(III) 0 to 80 wt.-% of one or more polycarbonates;
(IV) 0 to 50 wt.-% of one or more further (co)polymers; and
(V) 0 to 10 wt.-% of one or more polymer additives.

The present invention is defined by the claims.

In a preferred embodiment, the sum of components (I) and (II)-(V), as far as present, equals 100 wt.-%. Therefore, in this embodiment, the polymer part P of a wind turbine blade (W) then consists of the above components (I) and (II)-(V).

The polymer part P may be provided in a wide color range including light grey (e.g., RAL 7035) and white (RAL 9010) which may exemplarily be used for the wind turbine blade (W).

The claimed polymer part P is particularly weather-resistant, mechanically stable and suitible for thermoforming. Typically, the material the polymer part P is mainly or completely composed of is well extrudable. It may be used to reduce wind turbine blade (W) maintenance efforts, and costs, and may reduce the likelihood of undesired lightning strikes and undesired discharging events. Furthermore, the polymer part P is particularly UV stable. Preferably, the polymer part P is resistant to high impacts such as rain drops and hailstones up to 135 m/s or even more. The polymer part P preferably has low moisture ingress and thus reduces freeze/thaw effects that could harm the surface of the wind turbine blade (W).

The polymer part P as claimed is stable in a wide temperature range, preferably at least in the range of between -20°C to +80°C. It is stable against weather influences including salinity, acidity and high humidity. This also allows usability in off-shore and coastal locations. The polymer part P is preferably non-conductive. Moreover, the polymer part P typically bears good adhesive properties such as those regarding cure time, tensile strength, peel, shear strengths etc. The polymer part P may be produced in an economic and a cost-efficient way.

In one embodiment, the polymer part P may bear a medium elasticity, e.g., an elasticity module E in the range of 100 to 9000 MPa, wherein the elasticity also depends of the ingredients such as fibers and polymer additives.

The polymer part P of the present invention may form part of or be any assembly part of a wind turbine blade (W). Such assembly part may be an original construction element of the of a wind turbine blade (W) or may be an additional assembly part for supplementing a wind turbine blade (W). Exemplarily, such part for supplementing a wind turbine blade (W) may be an (additional) erosion shield and/or a reinforcing protective part for the leading edge of the wind turbine blade (W). Such shield and reinforcing part may also be understood as armor and reinforcement. As used herein the term "erosion shield" may be understood in the broadest way as any kind of protective outer surface (exterior). The erosion shield may be a hard shell erosion shield or may be obtained from a flexible material such as a tape or foil.

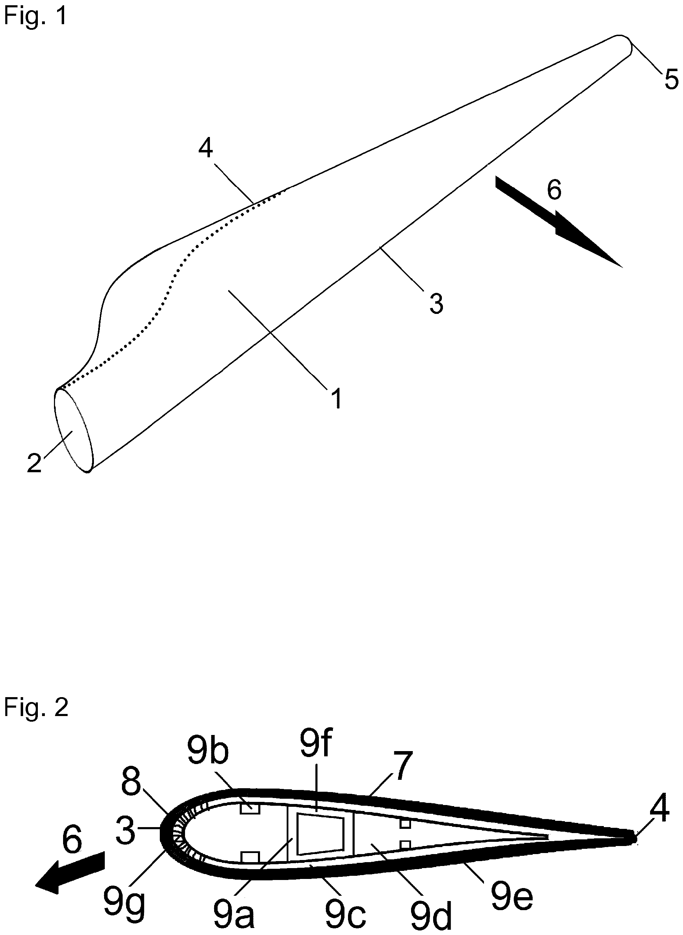

In a highly preferred embodiment, throughout the present invention, an erosion shield is an erosion shield of an edge, in particular the leading edge. It may be an erosion shield of the whole leading edge or a segment (also: section) thereof. An erosion shield may additionally or alternatively also be erosion shield boot mountable at the tip of the wind turbine blade (W). Such bot may optionally also be produced as a single piece mountable around the entire tip region of the wind turbine blade (W). Examples for erosion shields and examples for their properties and preparation are provided in Figures 1-10.

The polymer part P may be a planar element that may be used to be placed on the surface of the wind turbine blade (W). This may be part of the original wind turbine blade or may be added or replaced subsequently. The polymer part P may generally have any form. Depending on the intended use, it may have a rather planar geometry. Typically, when used as an erosion shield, it may have a planar design. In one preferred embodiment, the polymer part P has a thickness in the range of 0.01 mm and 20 mm, preferably in the range of 0.1 mm to 10 mm, in particular in the range of 0.5 mm and 5 mm. Exemplarily, the erosion shield has a thickness of in the range of 0.5 mm and 1 mm, in the range of 1 mm and 2 mm, in the range of 1.5 mm and 2.5 mm, in the range of 2 mm and 3 mm, in the range of 2.5 mm and 3.5 mm, or in the range of 3 mm and 4 mm.

The polymer part P, in particular when used as an or part of an erosion shield, may be a planar element that may optionally bear a size in the range of 0.5 to 20 m², preferably 0.75 to 15 m², more preferably 1 to 10 m². The geometry depends on the intended purpose.

In case it is intended to merely protect the leading edge, a rather elongated form or smaller elements may be used. Exemplarily, 2 to 50 cm, preferably 5 to 30 cm, in particular 7 to 20 cm, broad stripes may be used to protect each side of the leading edge. Thus, when a coverage of both sides of the leading edge is intended in once (i.e., an erosion shield overdrawing the leading edge), exemplarily stripes of 4 to 100 cm, preferably 10 to 60 cm, in particular 14 to 40 cm may be used. Exemplarily, stripes of approximately 10 cm width at each side of the leading edge (i.e., 20 cm in total) may be used. In order to provide one example, a stripe of 100 cm length, 20 cm width and 2 mm thickness may be used. When the polymer part P is mounted by means of thermoforming, its thickness may be reduced, typically but not necessarily the half of the original thickness (i.e., in the aforementioned example to approximately 1 mm). In case it is intended to protect the whole wind turbine blade (W), larger elements may be used. Just to provide one example, a polymer part P, in particular an erosion sheet element, may bear the geometry of 3 m in length and 2 m in width and 2 mm thickness.

It will be noted that the geometry (i.e., radius and shape) may also be adapted to the size of the leading edge to be protected and/or repaired. In particular when the wind turbine blade (W) or its leading edge is protected and/or repaired as a whole, the length of the polymer part may correspond to the length of the wind turbine blade (W). Accordingly, the length may be in the range of few meters (e.g., 1, 2, 3, 4, 5, 6, 7, 8, 9, or 10 m) or may be larger (e.g., in the range of 10 to 20 m, 15 to 30 m, 20 to 40 m, 25 to 50 m, 30 to 60 m, 35 to 70 m, 40 to 80 m, 45 to 10 m, 50 to 100 m, or even longer than 100 m). Exemplarily, for wind turbine blades (W) of 88 m (of an 8 MW wind turbine generator (WTG)) currently existing, the leading edge and thus its protection length may be in this range. Larger wind turbine blades (W) for 9, 9.5, 10, 20 and even more MW WTGs are under construction may evidently also be protected and/or repaired with the means of the present invention.

The edges of the polymer part P to be placed on the wind turbine blade (W) may be computer numerically control (CNC) trimmed to ensure high precision geometry and may optionally be fine trimmed and/or quality checked against the forming tools. Finally, the outer edges of the polymer part P may be optionally chamfered/de-burred to create a shallow angle, which may ensure smooth transition from the surface of the wind turbine blade (W) to the surface. This may avoid any abrupt change of geometry from one plane to another, which might interrupt aerodynamic air flow over the surface, i.e. disruption of boundary layer. The erosion shields may optionally then be bonded to the leading edge of the wind turbine blade (W) *in situ* using an adhesive (e.g., a 0.5 mm layer of silicone adhesive, or any other suitable adhesive).

Additionally or alternatively to a wind turbine blade (W), the polymer part P may also form part of another construction component of a wind turbine such as, but not limited to, e.g., a construction component selected from the group consisting of a hub, a nacelle, a tower and one or more segments of one or more thereof.

An example of a wind turbine blade (W) is depicted in Figures 1 and 2 for illustrative purposes. The geometry may also be different. A wind turbine may be an on-shore or an off-shore wind turbine. A wind turbine may be a Horizontal Access Wind Turbine (HAWT), Vertical Access Wind Turbine (VAWT), a form of Kite borne wind turbine, or other form of wind turbine. It will be further understood that also construction components, in particular wind turbine blades (W) or parts thereof, of alternative types of wind turbines such as (optionally twisted) Savonius type, Giromill type, floating and/or Dar-rieus type wind turbines may comprise or consist of one or more polymer parts P of the present invention.

As used herein, a leading edge may be understood in the broadest sense as the edge of the wind turbine blade (W) that - in an assembled wind turbine comprising the blade (W) - first contacts the air. In other words, the leading edge is the foremost part of the wind turbine blade (W) first hitting the air stream. This is well-known by a person skilled the art and is further illustrated in Figures 1 and 2.

An erosion shield may also be considered as a protective shell or coating of a wind turbine blade (W) that is suitible to protect the wind turbine blade (W) against environmental stress. It may be a full-life erosion shield or may be a replacement part. Preferably, it is a full-life erosion shield. The intended lifetime of a wind turbine blade (W) may be typically in the range of between 10 and 30 years, often in the range of between 15 and 25 years, but may also be different depending on the localization and environmental conditions of the wind turbine. The intended lifetime of a wind turbine blade (W) may also be considerably longer, in the range of 20 to 40 years, or even 50 years.

When the polymer part P of the present invention forms part of an erosion shield and/or a reinforcing protective part for the leading edge of the wind turbine blade (W), the interior of the wind turbine blade (W) may be any interior known in the art in the context of wind turbine blades. Optionally, the interior of a wind turbine blade (W) may comprise shear web elements combined with hollow parts, may optionally bear a further framework, may optionally bear spar caps and/or may bear a molded part providing the general shape of the wind turbine blade (W). Examples for interior assemblies of wind turbine blades (W) are provided in WO 2016/079535 and Shohag et al. ("Damage mitigation techniques in wind turbine blades: A review", Wind Engineering, 2017, 41(3):185-210).

Optionally, an erosion shield or reinforcing protective part may be connected with the interior by means of an adhesive. This is further exemplified in Shohag et al. ("Damage mitigation techniques in wind turbine blades: A review", Wind Engineering, 2017, 41(3):185-210). Examples of construction elements and their possible localization in the wind turbine blade (W) are also depicted in Figure 2.

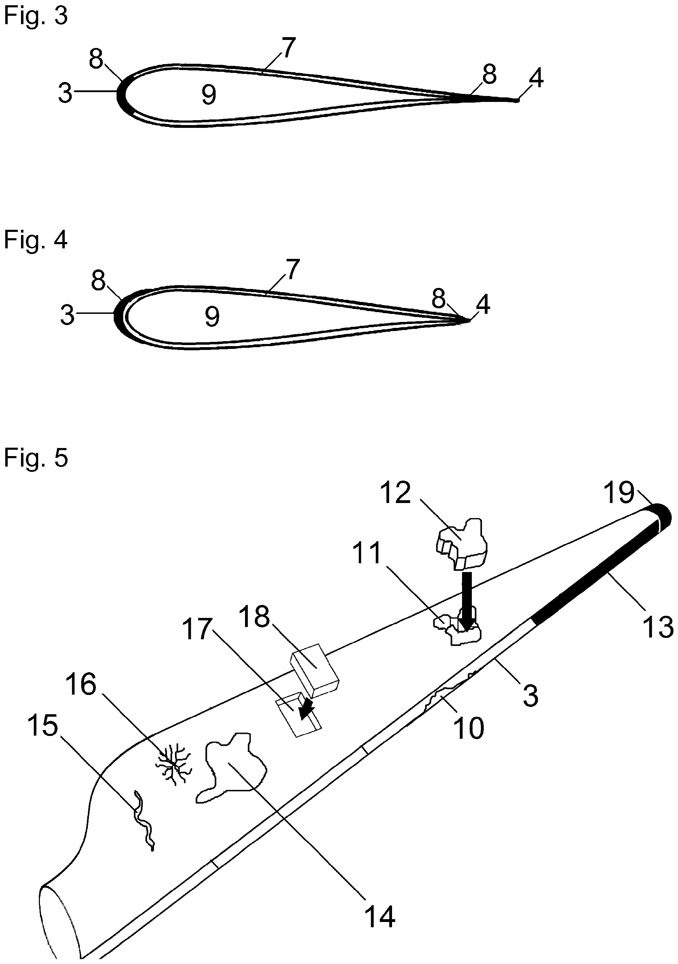

An erosion shield may be provided on the outer surface of the wind turbine blade (W) as part of the molding process of the wind turbine blade (W) (in-mold application) or subsequent to the molding process of the wind turbine blade (W) (post-mold application). This is further exemplified by Keegan et al. ("On erosion issues associated with the leading edge of wind turbine blades", Journal of Physics D, Applied Physics, 2013, 46(38)). Preferred assembly parts that comprise or consist of a polymer part P of the present invention are located on one or more of the edges, i.e., the leading edge and/or the trailing edge. Herein the polymer part P may optionally form part of the erosion shield (cf., the example depicted in Figure 3) or may be placed on top of the erosion shield (cf., the example depicted in Figure 4). It will be understood that also a combination of these examples is possible.

As already indicated above, the wind turbine blade (W) may comprise or consist of assembly parts selected from the group consisting of one or more construction elements forming an erosion shield, one or more shear web elements which optionally bear a sandwich setup, one or more spar cap elements, one or more molded parts providing the general shape, one or more hollow parts (internal cavities) connected or unconnected with another, an adhesive layer located between the erosion shield or part thereof and a molded part, one or more flanges (optionally load-carrying laminates), and/or one or more sandwich panels depicted as striped part). Each of the assembly parts of the wind turbine blade (W), in particular the erosion shield or a part thereof, may be a polymer part P of the present invention. Further, the assembly parts of the wind turbine blade (W) may optionally comprise one or more polymers other than those of polymer part P, one or more composite materials, one or more metals, one or more types of wood, and combinations of two or more thereof.

Preferably, the outer surface (exterior) of the wind turbine blade (W) is comparably smooth to reduce aerodynamic resistance. Therefore, as far as present, the erosion shield preferably has a smooth outer surface. Optionally, the wind turbine blade (W) may also bear a protective coating (e.g., a varnish/finish/gelcoat/paint) at its outermost surface. The inner surface of such erosion shield or all the other assembly parts may have a smooth or rough surface and may also bear a structure mechanically stabilizing the respective assembly part and/or reducing the part's weight.

Exemplarily, an assembly part may bear a honeycomb structure. Preferably, the outer surface of the wind turbine blade (W) bears a comparably smooth outer surface having a Rz ≤ 0.1 µm (e.g. determined by ASME Y14.36M - 1996). Optionally, the p outer surface bears a matt/low gloss surface (e.g., gloss at 60° of below 30) (e.g., determinable by ASTM D2457 - 13).

The term "polymer part P" may be understood in the broadest sense as any part of a wind turbine blade (W). The polymer part P may be an assembly part that is present in the wind turbine blade (W) just from the beginning (i.e., its production), may be a repair part to cure damages of a used wind turbine blade (W), it may be an additional part which is applied prior to operational use to prevent damage and consequently the need to repair the wind turbine blade (W), it may be an additional part which is applied to protect the wind turbine blade (W) after repair, or may be a supplement part for supporting the sustainability of a wind turbine blade (W).

It will be understood that the term "polymer part P" also includes blends of different polymers and composite materials comprising at least one the thermoplastic component T. Therefore, the polymer part P may also optionally comprise various amounts of further non-polymeric components such as fibers F. The polymer part P may also form one or more layers combined with layers of one or more other components (e.g., one or more metal layers (e.g., metal sheets), polymer layers (e.g., polymer sheets)), thereby forming a sandwich setup. The polymer part P may also be a sheet (also: foil or film) or tape. This is described below in the context of methods of use more in detail.

Preferred components and combinations thereof are provided in the following:

### Component (I) - Thermoplastic Component T

Typically, the thermoplastic component T is well extrudable and non-conductive. It may optionally be mixable with other components of up to 80 wt.-%. The thermoplastic component T may bear a medium elasticity, e.g., an elasticity module E in the range of 100 to 9000 M Pa.

It is generally taught that monomer A1 may be selected from the group consisting of styrene, alpha-methylstyrene and mixtures of styrene and at least one further monomer selected from the group consisting of alpha-methylstyrene, p-methylstyrene and C₁-C₈-alkyl(meth)acrylate. According to the present invention, monomer A1 is selected from styrene, alpha-methylstyrene and mixtures thereof. Preferably, the at least one monomer A1 comprises styrene.

More preferably, at least 50 wt.-%, even more preferably at least 60 wt.-%, even more preferably at least 70 wt.-%, even more preferably at least 80 wt.-%, in particular at least 90 wt.-% of the monomer A1 is styrene. Particularly preferably, monomer A1 consists (essentially) of styrene.

According to the present invention, monomer A2 is selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids, wherein optionally one or more of the monomers A2 may bear a functional group M-I.

Preferably, the at least one monomer A2 comprises at least 50 wt.-%, even more preferably at least 60 wt.-%, even more preferably at least 70 wt.-%, even more preferably at least 80 wt.-%, in particular at least 90 wt.-% acrylonitrile. It will be understood that the optionally present functional group M-I may be any group that can react with another polymeric residue of the same or another polymer strand. The monomer A2 may also consist (essentially) of acrylonitrile. According to the present invention, as far as present, the further monomer bearing a functional group M-I may be selected from the group consisting of anhydrides of unsaturated carboxylic acids (e.g., maleic anhydride), copolymerizable maleimide derivatives (e.g., N-phenylmaleimide, N-cyclohexylmaleimide), tert.-butyl-(meth)acrylate and glycidyl(meth)acrylate. It is further disclosed that the monomer bearing a functional group M-I may be those described in WO 2016/170103.

In a preferred embodiment, the one or more monomers A2 are selected from the group consisting of acrylonitrile and mixtures of acrylonitrile and anhydrides of unsaturated carboxylic acids and imides of unsaturated carboxylic acids. In a more preferred embodiment, the one or more monomers A2 are selected from the group consisting of acrylonitrile and mixtures of acrylonitrile and anhydrides of unsaturated carboxylic acids. In an even more preferred embodiment, the one or more monomers A2 are selected from the group consisting of acrylonitrile and mixtures of acrylonitrile and anhydrides of unsaturated carboxylic acids.

Preferably, the optionally present further monomer bearing a functional group M-I is maleic anhydride. Therefore, in a particularly preferred embodiment, the one or more monomers A2 are selected from the group consisting of acrylonitrile and mixtures of acrylonitrile and maleic anhydride.

The content of functional group M-I in the thermoplastic copolymer matrix A, as far as present, may preferably be in the range of between 0.1 and 5 wt.-%, more preferably 0.2 and 2 wt.-%, related to the thermoplastic copolymer matrix A.

Preferably, the copolymer matrix A comprises (or consists of):
(A1) 60 to 90 wt.-%, related to the total mass of thermoplastic copolymer matrix A, of monomer A1; and
(A2) 10 to 40 wt.-%, related to the thermoplastic copolymer matrix A, of a monomer A2.

More preferably, the copolymer matrix A comprises (or consists of):
(A1) 60 to 85 wt.-%, related to the total mass of thermoplastic copolymer matrix A, of monomer A1; and
(A2) 15 to 40 wt.-%, related to the thermoplastic copolymer matrix A, of a monomer A2.

In a preferred embodiment, the sum of components A1 and A2 equals 100 wt.-%.

According to the present invention, the thermoplastic copolymer matrix A comprises (or consists of):
(A1) 50 to 95 wt.-%, preferably 60 to 90 wt.-%, in particular 60 to 85 wt.-%, related to the total mass of copolymer matrix A, of a monomer A1 selected from the group consisting of styrene, alpha-methylstyrene and mixtures thereof; and
(A2) 5 to 50 wt.-%, preferably 10 to 40 wt.-%, in particular 15 to 40 wt.-%, related to the thermoplastic copolymer matrix A, of a monomer A2 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids, wherein optionally one or more of the monomers A2 may bear a functional group M-I.

In a preferred embodiment, the thermoplastic copolymer matrix A comprises or consists of:
(A1) the monomer A1 is styrene; and
(A2) the one or more monomers A2 are selected from the group consisting of acrylonitrile and mixtures of acrylonitrile and anhydrides of unsaturated carboxylic acids and imides of unsaturated carboxylic acids.

In a preferred embodiment, the thermoplastic copolymer matrix A comprises or consists of:
(A1) the monomer A1 is styrene; and
(A2) the one or more monomers A2 are selected from the group consisting of acrylonitrile and mixtures of acrylonitrile and anhydrides of unsaturated carboxylic acids.

In a more preferred embodiment, the thermoplastic copolymer matrix A comprises (or consists of):
(A1) 50 to 95 wt.-%, preferably 60 to 90 wt.-%, in particular 60 to 85 wt.-%, related to the total mass of copolymer matrix A, of styrene ; and
(A2) 5 to 50 wt.-%, preferably 10 to 40 wt.-%, in particular 15 to 40 wt.-%, related to the thermoplastic copolymer matrix A, of acrylonitrile ;
(A3) 0 to 5 wt.-%, preferably 0 to 3 wt.-%, in particular 0 to 2 wt.-%, related to the thermoplastic copolymer matrix A, of monomers selected from anhydrides of unsaturated carboxylic acids and imides of unsaturated carboxylic acids, in particular anhydrides of unsaturated carboxylic acids.

In a particularly preferred embodiment, the thermoplastic copolymer matrix A comprises or consists of:
(A1) the monomer A1 is styrene; and
(A2) the one or more monomers A2 are selected from the group consisting of acrylonitrile and mixtures of acrylonitrile and maleic anhydride.

Accordingly, in a highly preferred embodiment the thermoplastic copolymer matrix A (essentially) consists of:
(A1) the monomer A1 is styrene; and
(A2) the monomer A2 is acrylonitrile.

In a more preferred embodiment, the thermoplastic copolymer matrix A comprises (or consists of):
(A1) 50 to 95 wt.-%, preferably 60 to 90 wt.-%, in particular 60 to 85 wt.-%, related to the total mass of copolymer matrix A, of styrene ; and
(A2) 5 to 50 wt.-%, preferably 10 to 40 wt.-%, in particular 15 to 40 wt.-%, related to the thermoplastic copolymer matrix A, of acrylonitrile.

Accordingly, in another highly preferred embodiment the thermoplastic copolymer matrix A (essentially) consists of:
(A1) the monomer A1 is styrene; and
(A2) the monomers A2 are a mixture of acrylonitrile and maleic anhydride.

In a more preferred embodiment, the thermoplastic copolymer matrix A comprises (or consists of):
(A1) 60 to 90 wt.-%, in particular 60 to 85 wt.-%, related to the total mass of copolymer matrix A, of styrene;
(A2) 5 to 39.9 wt.-%, in particular 15 to 39.8 wt.-%, related to the thermoplastic copolymer matrix A, of a mixture of acrylonitrile ; and
(A3) 0.1 to 5 wt.-%, in particular 0.2 to 2 wt.-%, related to the thermoplastic copolymer matrix A, of maleic acid.

Accordingly, in other words, the copolymer matrix A particularly preferably is a styrene-acrylonitrile (SAN) copolymer or a styrene-acrylonitrile-maleic acid anhydride (SAN-MA) terpolymer.

Preferably, the graft base B1 has a glass transition temperature Tg below -20°C and/or is obtained by emulsion polymerization. More preferably, the graft base B1 has a glass transition temperature Tg below -20°C and is obtained by emulsion polymerization.

According to the present invention, the graft base B1 comprises (or consists of):
(B11)40 to 100 wt.-%, related to the graft base B1, of at least one C₁-C₈-alkyl(meth)acrylate as monomer B11;
(B12)0 to 20 wt.-%, related to the graft base B1, of at least one poly-functional cross-linking monomer B12; and
(B13) 0 to 40 wt.-%, related to the graft base B1, of at least one further copolymerizable monomer, preferably selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, and methyl vinyl ether,
where the sum of B11, B12 and B13 equals 100 wt.-%; and

Preferably, C₁-C₈-alkyl(meth)acrylate usable as component B11 and/or B21 is C₁-C₇-alkyl(meth)acrylate, more preferably C₁-C₆-alkyl(meth)acrylate, even more preferably C₁-C₅-alkyl(meth)acrylate, even more preferably C₁-C₄-alkyl(meth)acrylate, even more preferably C₁-C₃-alkyl(meth)acrylate, in particular C₁- or C₂-alkyl(meth)acrylate (i.e., methyl methacrylate, ethyl methacrylate, methyl acrylate, ethyl acrylate, or a combination of two or more thereof). Particularly preferably, C₁-C₈-alkyl(meth)acrylate usable as component B11 and/or B21 is selected from the group consisting of one or more methyl methacrylates, one or more ethyl methacrylates and a combination of two or more thereof.

Preferably, anhydrides of unsaturated carboxylic acids usable as component B22 are selected from the group consisting of maleic anhydride and phthalic acid anhydride, and combinations thereof, in particular are maleic anhydride.

Preferably, imides of unsaturated carboxylic acids usable as component B22 are selected from the group consisting of N-substituted maleimides such as, e.g., N-cyclohexylmaleimide, N-phenylmaleimide, and mixtures thereof.

Preferably, the graft shell B2 comprises (or consists of):
(B21)50 to 100 wt.-%, related to the graft shell B2, of a monomer B21 comprising (or being) styrene; and
(B22) 0 to 50 wt.-%, related to the graft shell B2, of at least one monomer B22 comprising (or being) acrylonitrile.

In a preferred embodiment, the sum of B21 and B22, as far as present, equals 100 wt.-%.

According to the present invention, the graft shell B2 comprises (or consists of):
(B21)50 to 100 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
(B22) 0 to 50 wt.-%, related to the graft shell B2, of at least one monomer B22 selected from the group consisting of acrylonitrile or mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

Preferably, monomer B21 of the graft shell B2 is selected from the group consisting of styrene, alpha-methylstyrene and mixtures of styrene and at least one further monomer selected from the group consisting of alpha-methylstyrene, p-methylstyrene and C₁-C₈-alkyl(meth)acrylate.

Preferably, at least 50 wt.-%, even more preferably at least 60 wt.-%, even more preferably at least 70 wt.-%, even more preferably at least 80 wt.-%, in particular at least 90 wt.-% of the monomer B21 is styrene. Particularly preferably, monomer B21 consists (essentially) of styrene.

Preferably, monomer B22 of the graft shell B2 is selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

Preferably, at least 50 wt.-%, even more preferably at least 60 wt.-%, even more preferably at least 70 wt.-%, even more preferably at least 80 wt.-%, in particular at least 90 wt.-% of the monomer B22 is acrylonitrile. Particularly preferably, monomer B22 consists (essentially) of acrylonitrile.

Preferably, the graft copolymer B comprises (or consists of):
(B1) 55 to 90 wt.-%, related to the graft copolymer B, of at least one graft base B1; and
(B2) 10 to 45 wt.-%, related to the graft copolymer B, of at least one graft shell B2.

More preferably, the graft copolymer B comprises (or consists of):
(B1) 55 to 65 wt.-%, related to the graft copolymer B, of at least one graft base B1; and
(B2) 35 to 45 wt.-%, related to the graft copolymer B, of at least one graft shell B2.

In a preferred embodiment, the sum of B1 and B2 equals 100 wt.-%.

In a preferred embodiment, the graft copolymer B comprises (or consists of):
(B1) 50 to 90 wt.-%, preferably 55 to 90 wt.-%, in particular 55 to 65 wt.-%, related to the graft copolymer B, of at least one graft base B1 having a glass transition temperature Tg below -20°C, wherein the graft base B1 which is obtained by emulsion polymerization comprises (or consists of):
   (B11)40 to 100 wt.-%, related to the graft base B1, of at least one C₁-C₈-alkyl(meth)acrylate as monomer B11;
   (B12)0 to 20 wt.-%, related to the graft base B1, of at least one poly-functional cross-linking monomer B12;
   (B13) 0 to 40 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, and methyl vinyl ether, where the sum of B11, B12 and B13 equals 100 wt.-%; and
(B2) 10 to 50 wt.-%, preferably 10 to 45 wt.-%, in particular 35 to 45 wt.-%, related to the graft copolymer B, of at least one graft shell B2 which is obtained via emulsion polymerization in the presence of at least one graft base B1comprises (or consists of):
   (B21)50 to 100 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
   (B22) 0 to 50 wt.-%, related to the graft shell B2, of at least one monomer B22 selected from the group consisting of acrylonitrile or mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

Preferably, the thermoplastic component T comprises (or consists of):
(A) 40 to 90 wt.-% of at least one thermoplastic copolymer matrix A; and
(B) 10 to 60 wt.-% of at least one graft copolymer B.

More preferably, the thermoplastic component T comprises (or consists of):
(A) 50 to 90 wt.-% of at least one thermoplastic copolymer matrix A; and
(B) 10 to 50 wt.-% of at least one graft copolymer B.

In a preferred embodiment, the sum of components A and B equals 100 wt.-%.

In a highly preferred embodiment, the thermoplastic component T comprises:
(A) 10 to 90 wt.-%, preferably 40 to 90 wt.-%, in particular 50 to 90 wt.-%, of at least one thermoplastic copolymer matrix A, comprising (or consisting of):
   (A1) 50 to 95 wt.-%, preferably 60 to 90 wt.-%, in particular 60 to 85 wt.-%, related to the total mass of copolymer matrix A, of a monomer A1 selected from the group consisting of styrene, alpha-methylstyrene and mixtures thereof; and
   (A2) 5 to 50 wt.-%, preferably 10 to 40 wt.-%, in particular 15 to 40 wt.-%, related to the copolymer matrix A, of a monomer A2 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids, wherein optionally one or more of the monomers A2 may bear a functional group M-I; and
(B) 10 to 90 wt.-%, preferably 10 to 60 wt.-%, in particular 10 to 50 wt.-%, of at least one graft copolymer B comprising (or consisting of):
   (B1) 50 to 90 wt.-%, preferably 55 to 90 wt.-%, in particular 55 to 65 wt.-%, related to the graft copolymer B, of at least one graft base B1 having a glass transition temperature Tg below -20°C, wherein the graft base B1 is obtained by emulsion polymerization and comprises:
      (B11)40 to 100 wt.-%, related to the graft base B1, of at least one C₁-C₈-alkyl(meth)acrylate as monomer B11;
      (B12)0 to 20 wt.-%, related to the graft base B1, of at least one poly-functional cross-linking monomer B12; and
      (B13) 0 to 40 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, and methyl vinyl ether, where the sum of B11, B12 and B13 equals 100 wt.-%; and
   (B2) 10 to 50 wt.-%, preferably 10 to 45 wt.-%, in particular 35 to 45 wt.-%, related to the graft copolymer B, of at least one graft shell B2 which is obtained via emulsion polymerization, in the presence of at least one graft base B1 which comprises:
      (B21)50 to 100 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and (B22) 0 to 50 wt.-%, related to the graft shell B2, of at least one monomer B22 selected from the group consisting of acrylonitrile or mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

Preferably, monomer B11 of the graft base B1 comprises (or consists of) at least one C₁-C₈-alkyl(meth)acrylate, preferably selected from butyl acrylate and ethylhexyl acrylate, in particular n-butyl acrylate.

Preferably, monomer B12 of the graft base B1, as far as present, comprises (or consists of) at least one poly-functional cross-linking monomer B12, preferably selected from the group consisting of allyl(meth)acrylate, divinylbenzene, diallyl maleate, diallyl fumarate, diallyl phthalate, triallyl cyanurate, triallyl isocyanurate and dicyclopentadienyl acrylate (DCPA).

Preferably, monomer B13 of the graft base B1, as far as present, comprises (or consists of) a further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, methyl vinyl ether.

Preferably, the graft base B1 comprises (or consists of):
(B11) 70 to 99.9 wt.-%, related to the graft base B1, of at least one C₁-C₈-alkyl(meth)acrylate;
(B12)0.1 to 10 wt.-%, related to the graft base B1, of at least one poly-functional cross-linking monomer B12; and
(B13)0 to 29.5 wt.-%, related to the graft base B1, of at least one further copolymerizable monomer,
where the sum of B11, B12 and B13 equals 100 wt.-%.

More preferably, the graft base B1 comprises (or consists of):
(B11)79.9 to 99.5 wt.-%, related to the graft base B1, of at least one C₁-C₈-alkyl(meth)acrylate;
(B12) 0.1 to 5 wt.-%, related to the graft base B1, of at least one poly-functional cross-linking monomer B12; and
(B13)0 to 20 wt.-%, related to the graft base B1, of at least one further copolymerizable monomer,
where the sum of B11, B12 and B13 equals 100 wt.-%.

Even more preferably, the graft base B1 comprises (or consists of):
(B11)87.5 to 99 wt.-%, related to the graft base B1, of at least one C₁-C₈-alkyl(meth)acrylate;
(B12)01 to 2.5 wt.-%, related to the graft base B1, of at least one poly-functional cross-linking monomer B12; and
(B13)0 to 10 wt.-%, related to the graft base B1, of at least one further copolymerizable monomer,
where the sum of B11, B12 and B13 equals 100 wt.-%.

In a preferred embodiment, the graft base B1 comprises (or consists of):
(B11)70 to 99.9 wt.-%, preferably 79.9 to 99.5 wt.-%, more preferably 87.5 to 99 wt.-%, related to the graft base B1, of at least one C₁-C₈-alkyl(meth)acrylate, preferably selected from butyl acrylate and ethylhexyl acrylate, in particular n-butyl acrylate, as monomer B11;
(B12)0.1 to 10 wt.-%, preferably 0.1 to 5 wt.-% or 0.5 to 5 wt.-%, more preferably 1 to 2.5 wt.-%, related to the graft base B1, of at least one poly-functional cross-linking monomer B12, preferably selected from the group consisting of allyl(meth)acrylate, divinylbenzene, diallyl maleate, diallyl fumarate, diallyl phthalate, triallylcyanurat, triallyl isocyanurate and dicyclopentadienyl acrylate (DCPA); and
(B13)0 to 29.5 wt.-%, preferably 0 to 20 wt.-%, more preferably 0 to 10 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, methyl vinyl ether,
where the sum of B11, B12 and B13 equals 100 wt.-%.

Preferably, the graft shell B2 comprises (or consists of):
(B21) 50 to 95 wt.-%, related to the graft shell B2, of a monomer B21; and
(B22) 5 to 50 wt.-%, related to the graft shell B2, of at least one monomer B22.

More preferably, the graft shell B2 comprises (or consists of):
(B21)65 to 80 wt.-%, related to the graft shell B2, of a monomer B21; and
(B22)20 to 35 wt.-%, related to the graft shell B2, of at least one monomer B22.

Even more preferably, the graft shell B2 comprises (or consists of):
(B21)75 to 80 wt.-%, related to the graft shell B2, of a monomer B21; and
(B22)20 to 25 wt.-%, related to the graft shell B2, of at least one monomer B22.

In a preferred embodiment, the graft shell B2 comprises (or consists of):
(B21)50 to 95 wt.-%, preferably 65 to 80 wt.-%, in particular 75 to 80 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
(B22) 5 to 50 wt.-%, preferably 20 to 35 wt.-%, in particular 20 to 25 wt.-%, related to the graft shell B2, of at least one monomer B22 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

In a preferred embodiment, the graft copolymer B is characterized at least in one of the following:
the graft base B1 comprises (or consists of):
   (B11)70 to 99.9 wt.-%, preferably 79.9 to 99.5 wt.-%, more preferably 87.5 to 99 wt.-%, related to the graft base B1, of at least one C₁-C₈-alkyl(meth)acrylate, preferably selected from butyl acrylate and ethylhexyl acrylate, in particular n-butyl acrylate, as monomer B11;
   (B12)0.1 to 10 wt.-%, preferably 0.1 to 5 wt.-%, more preferably 1 to 2.5 wt.-%, related to the graft base B1, of at least one poly-functional cross-linking monomer B12, preferably selected from the group consisting of allyl(meth)acrylate, divinylbenzene, diallyl maleate, diallyl fumarate, diallyl phthalate, triallylcyanurat, triallyl isocyanurate and dicyclopentadienyl acrylate (DCPA); and
   (B13)0 to 29.5 wt.-%, preferably 0 to 20 wt.-%, more preferably 0 to 10 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, methyl vinyl ether,
wherein the sum of B11, B12 and B13 equals 100 wt.-%; and/or
the graft shell B2 comprises (or consists of):
   (B21)50 to 95 wt.-%, preferably 65 to 80 wt.-%, in particular 75 to 80 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
   (B22)5 to 50 wt.-%, preferably 20 to 35 wt.-%, in particular 20 to 25 wt.-%, related to the graft shell B2, of at least one monomer B22 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

Particularly preferably, the thermoplastic component T may be selected from the group consisting of:
acrylonitrile-styrene-acrylate (ASA) copolymer;
a polymer blend comprising (or consisting of) ASA, in particular a blend of ASA and polycarbonate (PC) (in particular on the basis of bisphenol A) (the blend also designatable as ASA/PC blend);
a composite material comprising (or consisting of)acrylonitrile, styrene, a (meth)acrylate and one or more monomers bearing a functional group M-I and at least one fiber F bearing a functional group G-I at the surface which can react with M-I, in particular wherein the monomer bearing a functional group M-I in maleic acid anhydride and the fiber F is a glass fiber; and
such composite material further comprising (or consisting of) one or more further blended further (co)polymers, preferably wherein such further (co)polymer is a polycarbonate (in particular on the basis of bisphenol A).

Exemplarily, the thermoplastic component T may be or comprise the ASA copolymer Luran S or the ASA/PC blend Luran SC (Ineos Styrolution, Frankfurt).

### Component (II) - Fibers F

In general, the fibers F, as far as present in the composition of the present invention, may be any fiber structures that can be used in combination with a polymer part P of a wind turbine blade (W). The fibers F may be embedded in the polymer part P, may be located at the surface or a part of the polymer part P or may be embedded in the polymer part P and concomitantly located at the surface of the polymer part P.

In a preferred embodiment, the fibers F are selected from glass fibers, carbon fibers, aramid fibers (e.g., para-aramid synthetic fibers such as, e.g., Kevlar fibers or Nomex fibers) and basaltic fibers, in particular wherein the fibers F are glass fibers. In a further preferred embodiment, fibers F as laid out in WO 2016/170103 are used.

Alternatively or additionally, the fibers F may be selected from the group consisting of Spectra, Dyneema, Arville, Graphene, Diolen, Novana, Innegra fibers or may be any other fibers F that bear the claimed properties, i.e., comprising functional group G-I at their surface. As far as not inherently bearing functional group G-I, the fibers F may be chemically supplemented by monomers comprising such G-I.

In principle, the fibers F may be able to react with one or more of the other components or may be (essentially) inert. In a preferred embodiment, the fibers F comprise, at their surface, a functional group G-I that can react with any of the other components, preferably with the thermoplastic component T of component (I) and/or a polycarbonate of component (III), in particular with the thermoplastic component T of component (I). In a particularly preferred embodiment, the fibers F comprise, at their surface, a functional group G-I forming a covalent bond with the functional group M-I of monomer A2.

Accordingly, in a preferred embodiment, the polymer part P comprises the reaction products of anhydrides of unsaturated carboxylic acids as functional groups M-I of the monomer A2 and functional groups G-I at the surface of the fibers F selected from the group consisting of hydroxy, ester and amino groups which can react with M-I.

In a highly preferred embodiment, the polymer part P comprises the reaction products of anhydrides of unsaturated carboxylic acids (as functional groups M-I of the monomer A2) and hydroxy groups at the surface of the fibers F (as functional groups G-I). Then, M-I can react with G-I.

In a particularly preferred embodiment, the polymer part P comprises the reaction products of maleic acid anhydride (as functional groups M-I of the monomer A2) and hydroxy groups (as functional groups G-I) at the surface of glass fibers (as fibers F). Then, M-I can react with G-I. Therefore, in other words, then, A2 is preferably a mixture of acrylonitrile and maleic acid anhydride and the fibers F (component II) is present and comprises glass fibers. The preferred contents of maleic acid anhydride and combinations are described above and in WO 2016/170103.

Particularly preferably, the fibers F may be used in combination with the monomer bearing a functional group M-I, wherein both, F and M-I, are both such as laid out in WO 2016/170103.

The fibers F may be present in any form suitible for this purpose such as, e.g., as single fibers, unorganized/randomized fiber reinforcement, netting, tissue, or fiber roving. The fibers may be present in the whole polymer part P, may be present at the surface, may be present as one or more fiber layers or a combination of two or more thereof.

### Component (III) - Polycarbonate

Polycarbonate optionally used as component (III) of the present invention may be any polycarbonate known in the art.

In a preferred embodiment, the polycarbonate used as component (III) of the present invention is an aromatic polycarbonate. Aromatic polycarbonate may comprise one or more, preferably one or two, more preferably one aromatic polycarbonate. Aromatic polycarbonate may for example comprise polycondensation products, for example aromatic polycarbonates. Examples for aromatic polycarbonates suitable according to the invention are known in the art. The preparation of aromatic polycarbonates may be carried out e.g. by reaction of diphenols with carbonic acid halides, preferably phosgene, and/or with aromatic dicarboxylic acid dihalides, preferably benzenedicarboxylic acid dihalides, by the phase interface process, optionally using chain terminators, for example monophenols, and optionally using branching agents which are trifunctional or more than trifunctional, for example triphenols or tetraphenols. A preparation via a melt polymerization process by reaction of diphenols with, for example, diphenyl carbonate is also optionally possible. Diphenols for the preparation of the aromatic polycarbonates may be those of the formula (I) 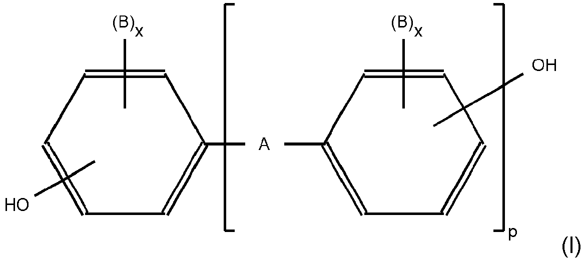 wherein A is a single bond, C₁ to Cs-alkylene, C₂-C₅-alkylidene, C₅-C₆-cycloalkylidene, - O-, -SO-, -CO-, -S-, -SO₂-, C₆ to C₁₂-arylene, on to which further aromatic rings optionally containing heteroatoms may be fused, or a radical of the formula (II) or (III): 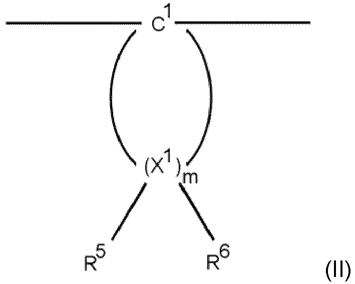 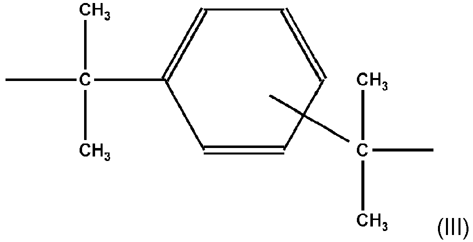
B in each case is C₁-C₁₂-alkyl, preferably methyl, or halogen, preferably chlorine and/or bromine,
x in each case independently of one another, is 0, 1 or 2,
p is 1 or 0, and
R⁵ and R⁶ individually for each X¹ and independently of one another denote hydrogen or C₁-C₆-alkyl, preferably hydrogen, methyl or ethyl,
X¹ denotes carbon and
m denotes an integer from 4 to 7, preferably 4 or 5, with the proviso that on at least one atom X¹, R⁵ and R⁶ are simultaneously alkyl.

Preferred diphenols are selected from the group consisting of hydroquinone, resorcinol, dihydroxydiphenols, bis-(hydroxyphenyl)-C₁-C₅-alkanes, bis-(hydroxyphenyl)-C₅-C₆-cycloalkanes, bis-(hydroxyphenyl)ethers, bis-(hydroxyphenyl)sulfoxides, bis-(hydroxyphenyl)ketones, bis-(hydroxyphenyl)sulfones and α,α-bis-(hydroxyphenyl)-diisopropyl-benzenes and nucleus-brominated and/or nucleus-chlorinated derivatives thereof. Particularly preferred diphenols are selected from the group consisting of bisphenol A, 4,4'-dihydroxydiphenyl, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl sulfone and di- and tetrabrominated or chlorinated derivatives thereof, such as, for example, 2,2-bis-(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane.

In a particularly preferred embodiment, the polycarbonate is an aromatic polycarbonate, in particular based on bisphenol A.

Bisphenol A may also be designated as 2,2-bis-(4-hydroxyphenyl)-propane. The diphenols may be employed individually or as any desired mixtures. The diphenols are well-known in the art.

Chain terminators which are suitable for the preparation of the thermoplastic, aromatic polycarbonates may, for example, be selected from the group consisting of phenol, p-chlorophenol, p-tert-butylphenol or 2,4,6-tribromophenol, and also long-chain alkylphenols, such as 4-[2-(2,4,4-trimethylpentyl)]-phenol, 4-(1,3-tetramethylbutyl)-phenol and monoalkylphenols or dialkylphenols having a total of 8 to 20 carbon atoms in the alkyl substituents, such as 3,5-di-tert-butylphenol, p-iso-octylphenol, p-tert-octylphenol, p-dodecylphenol and 2-(3,5-dimethylheptyl)-phenol and 4-(3,5-dimethylheptyl)-phenol. The amount of chain terminators to be employed may generally be in the range of between 0.5 mol% and 10 mol%, based on the sum of the moles of the particular diphenols employed.

The thermoplastic, aromatic polycarbonates preferably have average weight-average molecular weights (Mw, measured e.g. by ultracentrifuge or scattered light measurement) of from 10,000 to 200,000 g/mol, more preferably 15,000 to 80,000 g/mol, in particular 24,000 to 32,000 g/mol. The thermoplastic, aromatic polycarbonates may be branched in any known manner, and in particular preferably by incorporation of from 0.05 to 2.0 mol%, based on the sum of the diphenols employed, of compounds which are trifunctional or more than trifunctional, for example those having three and more phenolic groups. Both homopolycarbonates and copolycarbonates may be used. Also, 1 to 25 wt.%, preferably 2.5 to 25 wt.%, based on the total amount of diphenols to be employed, of polydiorganosiloxanes having hydroxyaryloxy end groups may optionally be employed for the preparation of copolycarbonates according to the invention according to component A. Preferred polycarbonates usable in addition or alternative to bisphenol A may be selected from the group consisting of homopolycarbonates, the copolycarbonates of bisphenol A with up to 15 mol%, based on the sum of the moles of diphenols, of other diphenols mentioned as preferred or particularly preferred, in particular 2,2-bis-(3,5-dibromo-4-hydroxyphenyl)-propane.

In one embodiment, the relative solution viscosity (ηᵣₑₗ) of the aromatic polycarbonates may be in the range of 1.18 to 1.4, preferably 1.20 to 1.32 (measured on solutions of 0.5 g polycarbonate in 100 ml methylene chloride solution at 25° C). The thermoplastic aromatic polycarbonates may be employed by themselves or in any desired mixture of one or more, preferably one to three or one or two thereof. Most preferably only one type of polycarbonate is used.

Most preferably the aromatic polycarbonate is a polycarbonate based on bisphenol A and phosgene, which includes polycarbonates that have been prepared from corresponding precursors or synthetic building blocks of bisphenol A and phosgene. These preferred aromatic polycarbonates may be linear or may optionally be branched due to the presence of branching sites.

### Component (IV) - Further (Co)polymers

The polymer part P may comprise one or more further (co)polymers as a further component (IV).

In a preferred embodiment, if a further polymer component is present, the polymer part P comprises as further component (IV) at least one (co)polymer selected from the group consisting of polyolefins, polyesters, polyamides, poly(p-phenylene oxide), polyphenylene sulphide, poly(methyl methacrylate), poly(methacrylamide), styrene maleic anhydride, polyethers, polyimides and polyoxymethylene.

### Component (V) - Polymer Additives

An additive as optionally used herein may be understood as any additive for polymer processing known in the art. Exemplarily, an additive may be a plasticizer, an antistatic, a lubricant, a foaming agent, an adhesion promoter, another blendable thermoplastic (co)polymer, a filling agent, an emulsifier, a surfactant, a flame retardant, a dye, a pigment, an antioxidant, an anti-hydrolysis stabilizer, a light stabilizer, a buffer agent, a heat stabilizer, a staining protector, a tightening agent and/or residuals of a buffer agent, a molecular weight modifier and/or a polymerization initiator.

A light stabilizer may be any light stabilizer known in the art such as, e.g., a compound or composition on the basis of benzophenone, benzotriazole, cinnamic acid, organic phosphites, organic phosphonites and/or sterically hindered amines.

A lubricant may be any lubricant known in the art such as, e.g., a carbon hydrate of more than 10 carbon atoms in length (e.g., oil, paraffin wax, PE wax or PP wax), a fatty alcohol, a ketone, a fatty acid, a carbonic acid amide or a carbonic acid ester of 6-20 carbon atoms, glycerol, ethylene glycol and/or pentaerythritol.

An antioxidant may be any antioxidant known in the art such as, e.g., a phenolic antioxidant (e.g., an alkylated monophenol, an ester an sterically hindered amide such as, e.g., 3,5-di-tert butyl-4-hydroxyphenyl-propionic acid, 2,6-ditert-butyl-4-methylphenol, pentaerythrityl-tetrakis-[3-(3,5-ditertiärbutyl-4-hydroxyphenyl)-propionate, N,N'-di-(3,5-ditert-butyl-4-hydroxyphenyl-propionyl)-hexamethylendiamine, or a benzotriazole).

An emulsifier may be any emulsifier known in the art such as, e.g., an alkaline salt of an alkylic sulfonic acid or an alkylarylic sulfonic acid, an alkylsulfate or a resinate, in particular an alkaline salt of a fatty acid of 8-30 carbon atoms.

A polymerization initiator may be any polymerization initiator known in the art such as, e.g., a persulfate (e.g., potassium persulfate) or a redox-based polymerization initiator,

A buffer agent may be any buffer agent known in the art such as, e.g., such suitable for adjusting the pH to approximately 6-9 such as, e.g., sodium bicarbonate and/or sodium pyrophosphate.

A molecular weight modifier may be any molecular weight modifier known in the art such as, e.g., a mercaptan, a terpinol and/or a dimeric alpha-methylstyrene.

The polymer part P may optionally also comprise any other component usable in a wind turbine blade (W). Exemplarily, the polymer part P may comprise means for reinforcement such as, e.g., metal (e.g. steel) fibers. Such means for reinforcement may be present at the surface, may be present as one or more fiber layers or a combination of two or more thereof.

### Polymer part P of a wind turbine blade (W)

In a preferred embodiment, the polymer part P comprises (or consists of):
(I) 40 to 100 wt.-%, preferably 50 to 100 wt.-%, in particular 60 to 99.9 wt.-%, of a thermoplastic component T;
(II) 0 to 60 wt.-%, preferably 0 to 50 wt.-%, in particular 0 to 40 wt.-%, of one or more fibers F;
(III) 0 to 30 wt.-%, preferably 0 to 25 wt.-%, in particular 0 to 20 wt.-%, of one or more polycarbonates;
(IV) 0 to 30 wt.-%, preferably 0 to 20 wt.-%, in particular 0 to 10 wt.-%, of one or more further (co)polymers; and
(V) 0 to 10 wt.-%, preferably 0 to 8 wt.-%, in particular 0.1 to 5 wt.-%, of one or more polymer additives.

Accordingly, the polymer part P of a wind turbine blade (W) preferably comprises (or consists of):
(I) 40 to 100 wt.-% of a thermoplastic component T;
(II) 0 to 60 wt.-% of one or more fibers F;
(III) 0 to 30 wt.-% of one or more polycarbonates;
(IV) 0 to 30 wt.-% of one or more further (co)polymers; and
(V) 0 to 10 wt.-% of one or more polymer additives.

More preferably, the polymer part P of a wind turbine blade (W) comprises (or consists of):
(I) 50 to 100 wt.-% of a thermoplastic component T;
(II) 0 to 50 wt.-% of one or more fibers F;
(III) 0 to 25 wt.-% of one or more polycarbonates;
(IV) 0 to 20 wt.-% of one or more further (co)polymers; and
(V) 0 to 8 wt.-% of one or more polymer additives.

More preferably, the polymer part P of a wind turbine blade (W) comprises (or consists of):
(I) 60 to 100 wt.-% of a thermoplastic component T;
(II) 0 to 40 wt.-% of one or more fibers F;
(III) 0 to 20 wt.-% of one or more polycarbonates;
(IV) 0 to 10 wt.-% of one or more further (co)polymers; and
(V) 0 to 5 wt.-% of one or more polymer additives.

Preferably, the polymer part P of a wind turbine blade (W) comprises (or consists of):
(I) 60 to 99.9 wt.-% of a thermoplastic component T;
(II) 0 to 40 wt.-% of one or more fibers F;
(III) 0 to 20 wt.-% of one or more polycarbonates;
(IV) 0 to 10 wt.-% of one or more further (co)polymers; and
(V) 0.1 to 5 wt.-% of one or more polymer additives.

In another preferred embodiment, the polymer part P of a wind turbine blade (W) comprises (or consists of):
(I) 60 to 98.9 wt.-% of a thermoplastic component T;
(II) 1 to 40 wt.-% of one or more fibers F;
(III) 0 to 20 wt.-% of one or more polycarbonates;
(IV) 0 to 10 wt.-% of one or more further (co)polymers; and
(V) 0.1 to 5 wt.-% of one or more polymer additives.

In a preferred embodiment, the sum of components (I) and (II)-(V), as far as present, equals 100 wt.-%.

As indicated above, the polymer part P may form part of or be an assembly part of a wind turbine blade (W). Such assembly part may be an original component of the of a wind turbine blade (W) or may be an additional assembly part for supplementing a wind turbine blade (W). Exemplarily, such part for supplementing a wind turbine blade (W) may be an (additional) erosion shield and/or a reinforcing protective part for the leading edge of the wind turbine blade (W). Exemplarily, the polymer part P may form part of one or both of the edges of the wind turbine blade (W), i.e., the leading edge and/or the trailing edge. More preferably, the polymer part P forms part of the leading edge. In this context, the polymer part P may represent the whole (leading) edge or a segment (also: sector) thereof. This is further exemplified in Figures 5-7.

Optionally, the leading edge may have (essentially) the same thickness all over the (leading) edge or may become thinner towards the tip of the wind blade turbine (W). depending on the type of wind turbine blade (W), the leading edge may range over the whole wing or may begin in some distance from its rot part that may also bear some means for mounting the wind turbine blade (W) to the hub. Particularly preferably, the polymer part P is located at an edge, in particular the leading edge, or a portion of the full length of the leading edge, or the full length of the leading edge, but in particular of the tip part of the wind turbine blade (W), because the tip part is exposed to the highest circular/rotational velocities and thus most severe mechanical strikes (also: particulate bombardment). The polymer part P that forms part of one or both of the edges, in particular the leading edge, may be embedded in an erosion shield of the wind turbine blade (W), i.e., also forms part thereof, or may be placed on top of the respective edge, in particular the leading edge.

A particularly smooth and inert surface obtainable by a leading edge composed of or comprising the polymer part P of the present invention may also prevent the leading edge from undesired freezing over because the adherence of ice crystals and snow-flakes is diminished in comparison to a traditional polymer material.

Preferably, the polymer part P mounted in the wind turbine blade (W) bears a comparably smooth outer surface having a Rz ≤ 0.1 µm (e.g. determined by ASME Y14.36M - 1996). Optionally, the polymer part P mounted in the wind turbine blade (W) bears a matt/low gloss surface (e.g., gloss at 60° of below 30) (e.g., determinable by ASTM D2457 - 13).

The polymer part P may also form part of, or be a repair part of, a wind turbine blade (W). Such repair part may be either a replacement part of an assembly part or may be a part for filling undesired damaged portion (e.g., spot, cavity, notch or chipped edge) of a wind turbine blade (W).

As used herein, the term "damaged portion" may be understood in the broadest as any kind of portion of the wind turbine blade (W) that bears any kind of damage. As used herein, the terms "spots" and "tarnish" may be understood interchangeably in the broadest sense as any kind of small-size defect of the surface of the wind turbine blade (W). It may also be a crack, spall or fissure. Such spot may be visible or invisible by the naked eye. As used herein, the terms "cavities", "pits" and "gaps" may be understood interchangeably in the broadest as any kind of hole in the outer surface of the wind turbine blade (W).

As used herein, the term "notch" may be understood in the broadest as any kind of gouge, i.e., longish grooving in the outer surface of the wind turbine blade (W). As used herein, the term "chipped edge" may be understood in the broadest as any kind of damaged edge of which parts of the outer layer have been carved out, often but not necessarily by means of mechanical strikes. Most preferably, a chipped edge is a chipped leading edge.

In a preferred embodiment, the polymer part P is located at the outer face of a wind turbine blade (W). The outer part of the wind turbine blade (W) is faced with weather influences such as abrasion, UV-light irradiation by sunlight, coldness, heat, moisture and the like. Therefore, it is particularly useful to use the polymer part P on the outer face of the wind turbine blade (W). This may exemplarily be in the form of an assembly part or a repair part of the wind turbine blade (W). As user throughout the present invention, the term "located at the outer face" does not necessarily mean that the respective part represents the outermost surface.

The part located at the outer face may also represent the outermost surface. Alternatively, the part located at the outer face may also bear a thin protective coating (e.g., a varnish/finish), typically having a thickness of less than 1 mm, at its outermost surface.

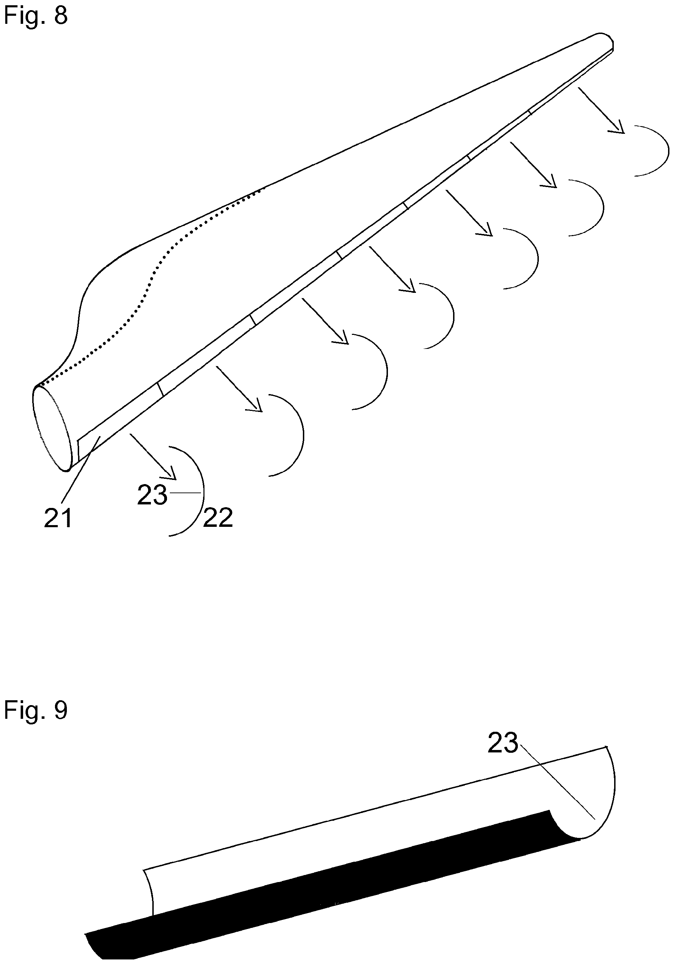

In a preferred embodiment, the polymer part P is a leading edge of a wind turbine blade (W) or a segment (also: sector) thereof. The leading edge is often subjected to particularly high abrasive forces. Therefore, it is useful to use the mechanically stable polymer part P at the leading edge of a wind turbine blade (W). A segment of an erosive shield is exemplified in Figure 9. Also the tip half (also tip sector or tip portion) of a wind turbine blade (W) may be subjected to particularly high abrasive forces.

Therefore, in a preferred embodiment, the polymer part P is a segment located in the tip half of a wind turbine blade (W) subjected to high circular velocity when the wind turbine rotates.

The polymer part P may also be a segment (also: sector) located in the tip-most 1/3, 1/4, 1/5, 1/6, 1/7, 1/8, 1/9, 1/10 or any value of between of a wind turbine blade (W) subjected to high circular velocity when the wind turbine rotates.

In a highly preferred embodiment, the polymer part P is an erosion shield of a wind turbine blade (W) or a part thereof. Therefore, the polymer part P then forms part of or is a protective cover of the wind turbine blade (W) enabling to protect the wind turbine blade (W) from weather influences such as abrasion, UV-light irradiation by sunlight, coldness, heat, moisture and the like. Assembly parts like erosion shield may optionally also be prepared by the extrusion of a sheet followed by thermoforming.

Alternatively, assembly parts like erosion shield may optionally also be prepared by injection molding, rotational molding or extrusion blow molding. Thus, the present invention also refers to a method for preparing an assembly part like an erosion shield comprising the step of extrusion of a sheet followed by thermoforming, injection molding, rotational molding or extrusion blow molding. In a preferred embodiment, the polymer part P is obtained from extrusion of a sheet followed by thermoforming (including (optionally computational, thermoforming *in situ),* injection molding, rotational molding, extrusion blow molding, 3D printing, pressure forming, vacuum forming, drape forming (optionally in oven), or a combination or two or more thereof.

The erosion shield may also be a sheeting of the wind turbine blade (W) or part thereof. Such sheeting may optionally be a flexible laminar structure and may be placed on the surface of a wind turbine blade (W) after preparing the wind turbine blade (W) or for repair purposes (also designatable as post-mold application).

Optionally, such sheeting (also foil or film) may be a laminar structure bearing one or more adhesives at one of its sides. Then, it may be used as a tape, even as a repair tape. Such repair sheet or repair tape may be exemplarily be used to repair a chipped edge such as a leading edge subjected to abrasion.

When the polymer part P is placed on surface of or incorporated in the wind turbine blade (W), preferably on surface of or incorporated in an erosion shield and/or one or both of the edges of the wind turbine blade (W), more preferably on top of one or both of the edges on top of the erosion shield, in particular the leading edge on top, or on the front, of the erosion shield, the polymer part P may also be a sheet or tape.

Typically, the polymer part P will extend around each side of the leading edge(s), commonly known as the upper and lower surfaces, or the pressure and suction sides of the wind turbine blade (W).

Alternatively, the erosion shield may also be a coating of the wind turbine blade (W) or part thereof placed during production of the wind turbine blade (W) purposes (also designatable as in-mold application).

Optionally, the wind turbine blade (W) may be assembled as combination of different assembly parts. Therefore, in a preferred embodiment, the polymer part P is a prefabricated assembly part replacing a damaged assembly part of a wind turbine blade (W) or a segment thereof. Exemplarily, a segment of an assembly part forming part of the leading edge that is (partly) damaged or attrited may be disassembled from the wind turbine blade (W) and replaced by the respective intact counterpart comprising or consisting of the polymer part P of the present invention.

In a preferred embodiment, the polymer part P, in particular when it is an erosion shield or an assembly part is reinforced by fibers F, i.e., comprises at least 1 wt.-%, preferably at least 5 wt.%, in particular at least 10 wt.-%, of fibers F. Such fiber reinforcement is also described in WO 2016/170103.

Alternatively, a damaged portion (e.g., spot, cavity, notch or chipped edge) of a wind turbine blade (W) may also be repaired in that such spot, cavity, notch or chipped edge is filled by polymer part P of the present invention. This may be either performed by covering or filling (in particular covering) the spot, cavity, notch or chipped edge with a pre-prepared polymer part P that fits into the spot, cavity, notch or chipped edge. Or, alternatively, filling such spot, cavity, notch or chipped edge may be performed by preparing the polymer part P fitting onto or into (in particular onto) the spot, cavity, notch or chipped edge just in place.

Accordingly, in one preferred embodiment, the polymer part P is a repair part fitting into a damaged portion (e.g., spot, cavity, notch or chipped edge) of a wind turbine blade (W) prepared ex *situ.* As used herein, the term "ex *situ"* may be understood in the broadest sense as any means of preparing such polymer part P not in place, i.e., directly in the spot, cavity, notch or chipped edge to be filled, but outside the spot, cavity, notch or chipped edge. Such polymer part P may be formed in a factory or in a three dimensional (3D) printer. Optionally, either the 3D shape of the spot, cavity, notch or chipped edge may be mimicked by the polymer part P or the 3D shape of the spot, cavity, notch or chipped edge may be adapted according to a prefabricated polymer part P. The surface may optionally be finished. Details are described in the context of the method below.

In an alternative preferred embodiment, the polymer part P is formed in or on a damaged portion (e.g., spot, cavity, notch or chipped edge) of a wind turbine blade (W) *in situ.* As used herein, the term *"in situ"* may be understood in the broadest sense as any means of preparing such polymer part P in place, i.e., in the spot, cavity, notch or chipped edge to be filled. The thermoplastic properties of the materials of polymer part P may be used, and a melt of the components of polymer part P is prepared and filled into the spot, cavity, notch or chipped edge to be filled. Subsequently, the melt is cooled until the polymer part P is hardened (i.e., tack free) in the spot, cavity, notch or chipped edge to be filled. The surface may optionally be finished. Details are described in the context of the method below.

Several of the aforementioned embodiments of a polymer part P are also depicted and further exemplified in Figures 5-7.

In a preferred embodiment, the polymer part P comprises (or consists of):
(I) 60 to 99.9 wt.-% of a thermoplastic component T comprising (or consisting of):
   (A) 50 to 90 wt.-%, of at least one thermoplastic copolymer matrix A comprising (or consisting of):
      (A1) 60 to 85 wt.-%, related to the total mass of thermoplastic copolymer matrix A, of styrene; and
      (A2) 15 to 40 wt.-%, related to the thermoplastic copolymer matrix A, of a monomer A2 selected from the group consisting of acrylonitrile and mixtures of acrylonitrile and anhydrides of unsaturated carboxylic acids, wherein the anhydrides of unsaturated carboxylic acids bear a functional group M-I, in particular wherein A2 is selected from the group consisting of acrylonitrile and mixtures of acrylonitrile and maleic anhydride; and
   (B) 10 to 50 wt.-%, of at least one graft copolymer B comprising (or consisting of):
      (B1) 50 to 90 wt.-%, preferably 55 to 90 wt.-%, in particular 55 to 65 wt.-%, related to the graft copolymer B, of at least one graft base B1 having a glass transition temperature Tg below -20°C which is obtained by emulsion polymerization comprises:
         (B11)87.5 to 99 wt.-%, related to the graft base B1, of butyl acrylate, ethylhexyl acrylate or a combination thereof, in particular n-butyl acrylate, as monomer B11, as monomer B11;
         (B12) 1 to 2.5 wt.-%, related to the graft base B1, of at least one poly-functional cross-linking monomer B12, preferably selected from the group consisting of allyl(meth)acrylate, divinylbenzene, diallyl maleate, diallyl fumarate, diallyl phthalate, triallylcyanurat, triallyl isocyanurate and dicyclopentadienyl acrylate (DCPA);
         (B13)0 to 10 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, and methyl vinyl ether, where the sum of B11, B12 and B13 equals 100 wt.-%; and
      (B2) 10 to 50 wt.-%, preferably 10 to 45 wt.-%, in particular 35 to 45 wt.-%, related to the graft copolymer B, of at least one graft shell B2 which is obtained via emulsion polymerization in the presence of at least one graft base B1comprises:
         (B21)75 to 80 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
         (B22)20 to 25 wt.-%, related to the graft shell B2, of at least one monomer B22 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids;
(II) 0 to 40 wt.-% of one or more fibers F, preferably fibers F selected from glass fibers, carbon fibers, aramid fibers and basaltic fibers, in particular glass fibers, optionally comprising, at their surface, a functional group G-I forming a covalent bond with the functional group M-I of a monomer A2; and
(III) 0 to 20 wt.-% of aromatic polycarbonate, in particular bisphenol A;
(IV) 0 to 10 wt.-% of one or more further (co)polymers selected from the group consisting of polyolefins, polyesters, polyamides, poly(p-phenylene oxide), polyphenylene sulphide, poly(methyl methacrylate), poly(methacrylamide), styrene maleic anhydride, polyethers, polyimides, and polyoxymethylene; and
(V) 0.1 to 5 wt.-% of one or more polymer additives.

In a more preferred embodiment, the polymer part P is an erosion shield of a wind turbine blade (W) or a part thereof, a prefabricated assembly part replacing a damaged assembly part of a wind turbine blade (W) or a segment thereof, a part filling a damaged portion (e.g., spot, cavity, notch or chipped edge) of a wind turbine blade (W) either prepared ex *situ* or *in situ.*

As indicated above, in a preferred embodiment, the sum of components (I) and (II)-(V), as far as present, equals 100 wt.-%.

The polymer part P may be prepared by any means. In a preferred embodiment, the polymer part P is obtained from extrusion of a sheet followed by thermoforming (including (including, e.g., manual thermoforming, computational thermoforming and/or may optionally be thermoforming *in situ),* injection molding, rotational molding, extrusion blow molding, 3D printing, pressure forming, vacuum forming, drape forming (optionally in oven), or a combination or two or more thereof. In a more preferred embodiment, the polymer part P is obtained from extrusion of a sheet followed by thermoforming, injection molding, rotational molding, extrusion blow molding, thermoforming *in situ,* 3D printing, or a combination or two or more thereof.

Accordingly, a further aspect of the present invention relates to a method for preparing a polymer part P according to the present invention comprising at least one step selected from the group consisting of extrusion of a sheet followed by thermoforming, injection molding, rotational molding, extrusion blow molding, 3D printing, pressure forming, vacuum forming, drape forming, or a combination of two or more thereof.

Thermoforming may include manual thermoforming and/or computational thermoforming and/or may optionally be conducted as thermoforming *in situ.*

It will be understood that the definitions and preferred embodiments as laid out above in the context of the polymer part P of the present invention *mutatis mutandis* also apply to the method for preparing such.

As indicated above, a sheet in this context may preferably have a thickness in the range of 0.01 mm and 20 mm, preferably in the range of 0.1 mm to 10 mm, in particular in the range of 0.5 mm and 5 mm. Exemplarily, the erosion shield has a thickness of in the range of 0.5 mm and 1 mm, in the range of 1 mm and 2 mm, in the range of 1.5 mm and 2.5 mm, in the range of 2 mm and 3 mm, in the range of 2.5 mm and 3.5 mm, or in the range of 3 mm and 4 mm. The sheet may have a planar size adjusted to the intended purpose.

This is exemplified in the context of a polymer part P employed as a planar element above. The sheet may be cutted in a shape that fits onto or into (in particular onto) the surface of the wind turbine blade (W), optionally in a computer-assisted manner (e.g., by means of CNC), may then be prepared for adhesion (e.g., by means of an adhesive as described herein), may then be placed in or on the respective part of the wind turbine blade (W) and may be subsequently be subjected to thermoforming. When the sheet is subjected to thermoforming, its thickness may be reduced. Such reduction of thickness may be in the range of 20 to 70%, exemplarily approximately 50%. Exemplarily, a sheet of originally 2 mm subjected to thermoforming *in situ* may be reduced to a thickness of approximately 1 mm. Finally, the thermoformed sheet may be subjected to tapering or fairing of the edges. In a preferred embodiment, the edges of the polymer part P mounted to the wind turbine blade (W) by any means are tapered and optionally polished. This may ensure beneficial aerodynamic properties.

As indicated above, the polymer part P of the present invention may also be used for protecting and/or repairing a wind turbine blade (W). This may be performed by filling a damaged portion (e.g., spot, cavity, notch or chipped edge) of step directly or by mean of replacing a damaged assembly part.

It will be understood that the definitions and preferred embodiments as laid out above in the context of the polymer part P of the present invention *mutatis mutandis* also apply to the methods for protecting and/or repairing a wind turbine blade (W).

A further aspect of the present invention relates to a method for protecting a wind turbine blade (W) or part thereof (also usable as a method for repairing a wind turbine blade (W) or part thereof) by an erosion shield comprising or consisting of the polymer part P of the present invention or a polymer part P obtainable from a method of the present invention, said method comprising the following steps:
(i) determining the dimensions of the wind turbine blade (W) or part thereof to be protected, optionally by means of performing a 3D scan;
(ii) preparing the erosion shield comprising or consisting of the polymer part P of the present invention or a polymer part P obtainable from a method of the present invention fitting onto wind turbine blade (W) or part thereof having the dimensions determined in step (i); and
(iii) mounting the erosion shield prepared in step (ii) onto wind turbine blade (W) or part thereof, optionally combined with one or more adhesives and/or by means of plastic welding; and
(iv) optionally tapering or fairing one or more edges and/or smoothing, dyeing and/or sealing of the surface of the erosion shield.

In this context the method for protecting a wind turbine blade (W) or part thereof is preferably an edge of the wind turbine blade (W) or part thereof, particularly preferably the leading edge of the wind turbine blade (W) or part thereof.

As used herein, step (i) may also comprise previously optionally removing at least a part of the erosion shield of the wind turbine blade (W), in particular optionally removing a (partly) damaged erosion shield or part thereof. This optional step of removing (also: dismounting) may optionally be achieved by any means in the art. Exemplarily, the (party) damaged erosion shield or part thereof may be unfastened by unscrewing, dissolving an adhesive (e.g., by means of a solvent or solvent mixture), melting an adhesive (e.g., by means of heat, including plastic welding), excising the assembly part by cutting, grinding or sanding it from the remaining parts of the wind turbine blade (W), stripping it from the wind turbine blade (W) or a combination of two or more of the aforementioned. Cutting may be performed by any means suitible for this purpose. Exemplarily, cutting may be performed by means of a tool selected from the group consisting of a knife (including a (manual) cutter), a saw (including, e.g., a saw selected from the group consisting of a wire saw, a circular saw, a keyhole saw, a padsaw), a molding/rotary cutter, and a plane/slicer.

The step (i) of determining the dimensions of the wind turbine blade (W) or part thereof (preferably an edge or part thereof, in particular its leading edge or part thereof) may be conducted by any means. In a preferred embodiment, the step of determining the dimensions of the wind turbine blade (W) or part thereof is performed by scanning (e.g., by means of a 3D scanner). This may be conducted along the full length of the blade or for a section thereof (e.g. upper 30-35% of leading edge length). Such scan data may be used to design the geometries of a series of thermoforming tools. These may be adapted to the curvature of the leading edge in the respective segments of the wind turbine blade (W). This is exemplified in Figure 8 for illustrative purposes. exemplarily, the leading edge may be separated in segments such as 2, 3, 4, 5, 6, 7, 8, 9, 10 or more that 10 segments. These thermoforming tools may then be used to produce (and thermoform) polymer parts P (e.g., an erosion shield or part thereof).

Step (ii) of preparing the erosion shield comprising or consisting of the polymer part P may be conducted by any means. As described above, in a preferred embodiment, it is conducted by means of at least one step selected from the group consisting of extrusion of a sheet followed by thermoforming, injection molding, rotational molding, extrusion blow molding, 3D printing, pressure forming, vacuum forming, drape forming, or a combination of two or more thereof. Optionally, thermoforming tools may be prepared upon 3D scan data obtained by step (i). These may be prepared according to the specific CAD design using a high precision machining method, then each thermoforming tool may be used to thermoform extruded sheets of polymer part P material into the CAD designed geometries. Each thermoformed erosion shield may then be trimmed (e.g., in a computer-assisted manner (e.g., by means of CNC)). Subsequently, the outer edges of each polymer part P thermoformed erosion shield may be optionally chamfered/de-burred to create a shallow angle, which may ensure smooth transition from the surface of the wind turbine blade (W) to the surface. Optionally, each polymer part P thermoformed erosion shield may then be treated with a process to improve adhesion, or enhance UV resistance, improve aerodynamic (e.g., decrease aerodynamic resistance and/or increase smoothness of the surface to avoid turbulences, improve optical appearance, etc.

The step (iii) of mounting the erosion shield prepared in step (ii) onto wind turbine blade (W) or part thereof may be conducted by any means. Optionally, this step (iii) may include the cleaning of the surface to obtain a sound surface free of moisture and contaminants. This may improve fitting and sustainability of the erosion shield mounted onto the wind turbine blade (W). Exemplarily, the surface may optionally be prepared for adhesion by wiping with a solvent, or other suitable chemical. Alternatively, there may be no need to clean or modify the surface. Mounting the erosion shield to the wind turbine blade (W) may be performed by any means. Preferably, mounting the polymer part P may be achieved by using one or more adhesives. Alternatively or additionally, mounting the polymer part P may be achieved by means of plastic welding.

As used throughout the present invention, the term "adhesive" may be understood in the broadest sense as any agent that adheres two parts with another. Exemplarily, an adhesive may be a contact adhesive or a hot adhesive. An adhesive may be a one-part or a multi-part adhesive. Exemplarily, an adhesive may be selected from the group consisting of polyurethane (PU), polyester resin, a polyol resin, an epoxy resin, vinyl ester resin, phthalic anhydride resin, silicone/polysiloxane or a combination of two or more thereof.

Exemplarily, polyurethane resins may be combined with one or more of polyester resins, polyols and acrylic polymers. Curing may be performed by any means and will be adapted to the specific adhesive employed and may include drying, chemically reacting, UV irradiation, cooling, heating, etc. exemplarily, a thin layer an adhesive may be used in situ such as, e.g., a layer in the range of 0.1 and 1 mm, in particular 0.2 and 0.75 mm. Exemplarily, an erosion shield may be bonded to the leading edge of the wind turbine blade (W) *in situ* using a 0.5 mm layer of silicone adhesive. In one preferred embodiment, the adhesive is removable such as exemplarily by mans of a solvent not harming the wind turbine blade (W) and/or by means of grinding.

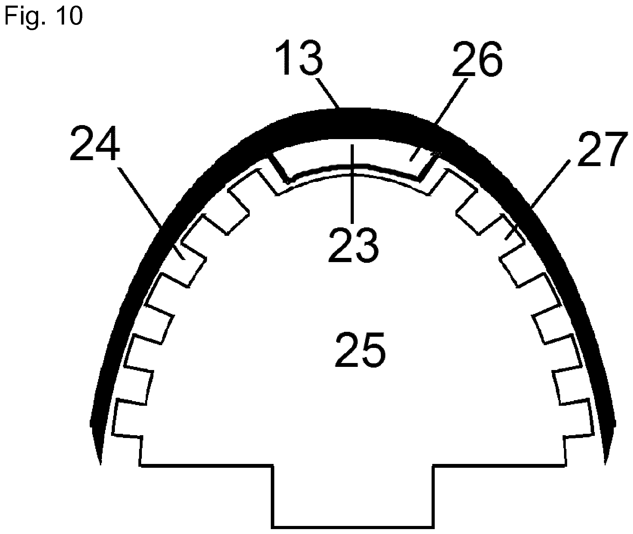

Optionally, the adhesive may be applied to the inner surface of the formed, in particular thermoformed, erosion shield comprising or consisting of the polymer part P of the present invention. This may be achieved by any means. In practice, it may be desired to determine the resultant bond strength to ensure a uniform application of adhesive. Exemplarily, this may be achieved by applying the adhesive layer by means of a comb spreader tool that preferably bears a curvature that (essentially) fits into the inner of the formed, in particular thermoformed, erosion shield. Such comb spreader typically has a number of teeth that may vary upon in view of the adhesive used and its viscosity. The comb spreader may be made of any material, preferably of plastic, metal and/or wood. This is further exemplified and illustrated in Figure 10. By using such comb spreader tool, a particularly well-defined thickness of the adhesive layer may be achieved. Furthermore, such method is comparably cost-effective and may be conducted with minimal training of field technical operatives.

As the change in curvature/geometry is minimal from each 1 m (nominal) segment of the (leading) edge to the next 1 m segment, it is possible to average this curvature/geometry along several (leading) edge segments and design a single comb spreader, which is suitable for applying adhesive for each of these segments erosion shields, depending on the (leading) edge geometry potentially even the whole (i.e., full-length) (leading) edge. In order to exemplify this, this means that even on a comparably long typical offshore wind turbine blade, for which there would typically be 15 x 1 m erosion shields, only 4 or 5 comb spreader tool curvatures would be required to apply adhesive to all 15 erosion shields.

Nevertheless, it is particularly preferable to use a specific comb spreader tool having a specific curvature for each segment of the (leading) edge.

Since, as indicated above, the apex of the leading edge, and consequently the apexes of all erosion shields protecting those, receive particularly harsh impact stress, it is desirable that the erosive shields bear some cushioning effect. In a preferred embodiment, the adhesive layer improves the cushioning effect of the erosive layer.

Accordingly, it is preferred that the size and quantity of voids/cavities/air pockets is minimized in the adhesive layer as these might lead to accelerated damage to, and potentially even penetration through, the respective erosion shields. Accordingly, in a preferred embodiment, each erosion shield is pre-fitted with a thick strip of double sided adhesive tape on the underside of the apex. These strips of double sided tape will be applied by removing one side of the protective covering and pressing the strips into place. In a preferred embodiment, the thickness of the tape is as wide as the desired thickness of the adhesive layer. Exemplarily such strip may be a 1-2 cm wide x 0.5 mm thick strip that may be as long as or shorter than the segment of the erosion shield. This may avoid voids/cavities/air pockets in the adhesive layer. The comb spreader tool is then preferably designed to spare the double strip of double sided adhesive tape on the underside of the apex. This is exemplified in Figure 10. When the adhesive is applied, the other side of the protective covering of the strip of double sided tape may be removed and the erosion shield may be pressed to the wind turbine blade (W)

Accordingly, in a particularly preferred embodiment, mounting the erosion shield onto wind turbine blade (W) or part thereof comprises the following sub-steps:
(iii-a) applying a strip of double sided adhesive tape on the underside of the apex of the erosion shield, wherein said double sided adhesive tape preferably has the thickness of the desired adhesive coating and preferably bears a protective layer on the side remote to the side adhered to the apex;
(iii-b) applying an adhesive, in particular a silicone adhesive, to the inner surface of the erosion shield of step (iii-a), wherein preferably a comb spreader tool is used that particularly preferably spares the strip of double sided adhesive tape from adhesive; and
(iii-c) removing the other protective layer of the double sided adhesive tape and pressing the erosion shield of step (iii-b) treated with the adhesive onto the respective position of the wind turbine blade (W) where the erosion shield should be mounted until the adhesive is hardened.

Also the optional step (iv) of tapering or fairing one or more edges and/or smoothing, dyeing and/or sealing of the surface of the erosion shield may be conducted by any means. In this step, the surface may be finished. This may be achieved exemplarily by sanding, abrading, staining, impregnating, varnishing, etc. Smoothing according to step (iv) may also include removing excessive adhesive. Optionally, a potential step between the polymer part P and the remaining wind turbine blade (W) may be filled by means of one or more adhesives or one or more fillers and/or one or more sealants (e.g., 3M W2600 Edge Sealant). This may improve aerodynamic properties.

The method for protecting a wind turbine blade (W) may also be used for (re)protecting a repaired wind turbine blade (W).

Optionally, the previous erosion shield or other outer layer may be first removed. Then, the wind turbine blade (W) (including one or more inner layers thereof) may be repaired such as, e.g., by means of prepreg resin, fiber, reinforced material and/or the like. Finally, the wind turbine blade (W) may be (re)protected again by means of a method as described above.

It will be understood that the definitions and preferred embodiments as laid out above in the context of the polymer part P of the present invention and the method for protecting a wind turbine blade (W) of the present invention *mutatis mutandis* also apply to the methods for repairing a wind turbine blade (W).

Accordingly, a further aspect of the present invention relates to a method for repairing a wind turbine blade (W), said method comprising the following steps:
(i) identifying one or more damaged portions (e.g., spots, cavities, notches or chipped edges) of a wind turbine blade (W), and optionally cutting, grinding or sanding out segments that bear the damaged portions from the wind turbine blade (W) thereby obtaining at least one cavity or notch in the wind turbine blade (W);
(ii) covering or filling (in particular covering) the spot, cavity, notch or chipped edge of step (i) with a polymer part P according to the present invention or a polymer part P obtainable from a method of the present invention, wherein the polymer part P is prepared by:
   (a) an ex *situ* process comprising the following steps:
      (a-i) determining the dimensions of the damaged portion (e.g., spot, cavity, notch or chipped edge) of step (i), optionally by means of performing a 3D scan;
      (a-ii) preparing a polymer part P according to the present invention or a polymer part P obtainable from a method of the present invention fitting onto or into (in particular onto) the spot, cavity, notch or chipped edge having the dimensions determined in step (a-i); and
      (a-iii) mounting the polymer part P prepared in step (a-ii) onto or into (in particular onto) the damaged portion (e.g., spot, cavity, notch or chipped edge) of step (a-ii), optionally combined with one or more adhesives and/or by means of plastic welding; or
   (b) an *in situ* process comprising the step of curing the wind turbine blade (W) with melt comprising the components of polymer part P as defined in the context of the polymer part P, optionally by means of plastic welding; and
(iii) optionally tapering or fairing one or more edges and/or smoothing, dyeing and/or sealing of the surface of the wind turbine blade (W) or the repaired part thereof.

The step (i) of identifying one or more damaged portions (e.g., spots, cavities, notches or chipped edges) of a wind turbine blade (W) may be performed by any means, exemplarily by means of investigating the surface of the wind turbine blade (W) and/or its erosion shield visually or by technical means such a, e.g., 3D scanning. Preferably, such spot, cavity, notch or chipped edge identified is localized at the outer face of the wind turbine blade (W).

Optionally, one or more segments that bear the damaged portions may be cut, abraded using sanding paper, or similar abrasive material, or ground out using a powered or manual grinding method, from the wind turbine blade (W). This may provide at least one cavity (also designatable as indentation or depression) or notch in the wind turbine blade (W) that can be adapted to achieve a shape and texture suitable for filling it. When a prefabricated polymer part P is intended to fill or cover the spot, cavity, notch or chipped edge, its shape may optionally be adapted to the prefabricated polymer part P.

Optionally, the spot, cavity, notch or chipped edge may be cleaned to obtain a clean and sound substrate that is free of moisture and contaminants. This may improve fitting and sustainability of the polymer part P mounted in or to the wind turbine blade (W). The surface may optionally be prepared for adhesion by wiping with a solvent, or other suitable chemical. Alternatively, there may be no need to clean or modify the surface. Then, the wind turbine blade (W) having a spot, cavity, notch and/or chipped edge may be subjected to repairing without a previous cleaning step.

In a preferred embodiment, the shape of the spot, cavity, notch or chipped edge to be filled or covered is scanned, exemplarily, by means of a 3D scanner or by measuring it manually. It will be noted that alternatively or additionally or by any other method to capture and record the surface geometry may be used in this context as well.

In a preferred embodiment, the shape of the entire leading edge, or other edge, or a portion of the edge, is scanned (e.g., by means of a 3D scanner or by measuring it manually, and/or any other method to capture and record the surface geometry). In an alternative preferred embodiment, only the shape of the (partly) damaged section of the leading edge, or other edge, or a portion of the edge, is scanned (e.g., by means of a 3D scanner or by measuring it manually, and/or any other method to capture and record the surface geometry). Accordingly, in a preferred embodiment, 3D scanning is used to capture the surface geometry of the (partly) damaged section (in particular leading edge or part thereof) along the full length of a blade, or just the upper portion of the blade towards the tip section (e.g. upper 30-35% of leading edge length). This scan data may be used to design the geometries of a series of thermoforming tools.

These thermoforming tools may then be used to produce (and thermoform) polymer parts P (e.g., an erosion shield or part thereof).

Exemplarily, the leading edge fine-scale geometry may be captured by means of a rapid scan of the upper (i.e., tip-most) range of 5-70%, preferably in the upper range of 10-60%, more preferably in the upper range of 20-50%, even more preferably the upper range of 25-40%, even more preferably the upper range of 30-35%, in particular approximately 33% portion of the wind turbine blade (W) from a particular blade model, which typically takes less than one day and may be completed by rope access. These scan data may be used to establish the median shield geometry for the wind turbine blade (W), and may be used to generate computer-aided design (CAD) for the particular median geometries of a series of thermoforming tools and a series of erosion shields.

The median geometry of a particular model of wind turbine blade (W) may be established by scanning the entire leading edge, or other edge, or a portion of the edge of a selection of that model of wind turbine blade, or by measuring it manually, or by some other method to capture and record the surface geometry. These various different surface geometries may be digitally merged to establish the typical geometry of the leading edge, other trailing edge, surface in order to design a series of thermoforming tools, and a corresponding series of erosion shields, each of which are compatible with the average surface geometries of the majority of blades of that particular blade model, which have been produced. Optionally, each of the thermoforming tools may be produced according to the specific CAD design using a high precision machining method, then each thermoforming tool may be used to thermoform extruded sheets of polymer part P material into the CAD designed geometries. Each thermoformed erosion shield may then be trimmed (e.g., in a computer-assisted manner (e.g., by means of CNC)). Subsequently, the outer edges of each polymer part P thermoformed erosion shield may be optionally chamfered/de-burred to create a shallow angle, which may ensure smooth transition from the surface of the wind turbine blade (W) to the surface. Optionally, each polymer part P thermoformed erosion shield may then be treated with a process to improve adhesion, or enhance UV resistance, improve aerodynamic (e.g., decrease aerodynamic resistance and/or increase smoothness of the surface to avoid turbulences, improve optical appearance, etc.

The step (ii) of covering or filling the spot, cavity, notch or chipped edge may be performed by either preparing a polymer part P fitting onto or into (in particular onto) the spot, cavity, notch or chipped edge not directly in the spot, cavity, notch or chipped edge (i.e., prepared ex *situ*) or may be prepared directly in or on the spot, cavity, notch or chipped edge (i.e., prepared *in situ).*

In one preferred embodiment, step (ii) comprises the following steps:
(a-i) determining the dimensions of the damaged portion (e.g., spot, cavity, notch or chipped edge) of step (i), optionally by means of performing a 3D scan;
(a-ii) preparing a polymer part P according to the present invention or a polymer part P obtainable from a method of the present invention fitting onto or into (in particular onto) the spot, cavity, notch or chipped edge having the dimensions determined in step (a-i); and
(a-iii) mounting the polymer part P prepared in step (a-ii) onto or into (in particular onto) the damaged portion (e.g., spot, cavity, notch or chipped edge) of step (a-ii), optionally combined with one or more adhesives and/or by means of plastic welding.

Optionally, the polymer part P fitting onto or into (in particular onto) the spot, cavity, notch or chipped edge may be prepared by 3D printing. Alternatively, the polymer part P may be prepared from a copolymer block comprising the ingredients of polymer part P by means of removing superfluous copolymer material such as by means of a molding cutter (also: milling or rotary cutter) optionally controlled in a computer-assistant manner (e.g., by means of computer numeric control (CNC) trimming). Alternatively, superfluous material may also be removed manually. For this purposes, the polymer part P may optionally be a rather planar element such as, e.g., an erosion shield e as described above.

Mounting the polymer part P to the wind turbine blade (W) may be performed by any means. Preferably, mounting the polymer part P may be achieved by using one or more adhesives. An adhesive may optionally be conducted as exemplified more in detail above in the context of the method for protecting a wind turbine blade (W) or part thereof by an erosion shield as laid out above. Likewise, the step (a-iii) of mounting the polymer part P may be conducted according to the methodical steps described in the context of the method for protecting a wind turbine blade (W) or part thereof by an erosion shield as laid out above, in particular method (iii-a)-(iii-c) thereof, i.e., particularly preferably comprises the following sub-steps:
(aa) applying a strip of double sided adhesive tape on the repair part of the damaged portion (e.g., spot, cavity, notch or chipped edge), in particular wherein said repair part is an erosion shield of an (leading) edge, wherein said double sided adhesive tape preferably has the thickness of the desired adhesive coating and preferably bears a protective layer on the side remote to the side adhered to the repair part;
(ab) applying an adhesive, in particular a silicone adhesive, to the underside surface of the repair part, in particular the inner surface of the erosion shield of step (iii-a), wherein preferably a comb spreader tool is used that particularly preferably spares the strip of double sided adhesive tape from adhesive; and
(ac) removing the other protective layer of the double sided adhesive tape and pressing the repair part treated with the adhesive onto the respective position of the wind turbine blade (W) where the repair part should be mounted until the adhesive is hardened.

Alternatively or additionally, mounting the polymer part P may be achieved by means of plastic welding. Alternatively or additionally, also screws and/or plugs may be employed for mounting. Optionally, the surface may optionally be finished. This may be achieved exemplarily by sanding, abrading, staining, impregnating, varnishing, painting, coating, etc.

In an alternative preferred embodiment, step (ii) comprises the step of curing the wind turbine blade (W) with a melt comprising the components of polymer part P as defined above, optionally by means of plastic welding. Typically, plastic melding leads to the melted plastic material to mechanically and/or chemically adhere to the remaining part of the wind turbine blade (W). Exemplarily, the melt may fill a spot, cavity or notch or may be placed/bonded onto the surface of the wind turbine blade (W). Thereby, it may (partly (e.g., a chipped edge) or completely) cover the surface of the wind turbine blade (W).

Then, a melt comprising the components of polymer part P as defined above is prepared and filled into or covering onto the spot, cavity, notch or chipped edge to be cured. Placed in or on the spot, cavity, notch or chipped edge, the melt is cooled until a polymer part P is obtained right in place (i.e., *in situ).* Optionally, the surface may be finished. This may be achieved exemplarily by sanding, abrading, staining, impregnating, varnishing, etc.

Smoothing according to step (iii) may also include removing excessive adhesive. Optionally, a potential step between the polymer part P and the remaining wind turbine blade (W) may be filled by means of one or more adhesives or one or more fillers and/or one or more sealants (e.g., 3M W2600 Edge Sealant). This may improve aerodynamic properties. This additional step may also be considered as optional step (iv).

As indicated above, the polymer part P may also be (or be used to prepare) an assembly part. Therefore, the present invention relates to a method for repairing a wind turbine blade (W) wherein an at least partly damaged assembly part is replaced by its intact counterpart comprising or consisting of a polymer part P.

Accordingly, a further aspect of the present invention relates to a method for repairing a wind turbine blade (W), said method comprising the following steps:
(i) identifying an at least partly damaged assembly part of a wind turbine blade (W) that bears one or more damaged portions;
(ii) removing the at least partly damaged assembly part identified in step (ii); and
(iii) replacing the removed at least partly damaged assembly part by the respective assembly parts comprising or consisting of a polymer part P according to the present invention or a polymer part P obtainable from a method of the present invention; and
(iv) optionally tapering or fairing one or more edges and/or smoothing, dyeing and/or sealing of the surface of the wind turbine blade (W) or the repaired part thereof.

This method may also be understood as replacing an (at least partly) damaged assembly part of the wind turbine blade (W). As mentioned above, an (at least partly) damaged assembly part of the wind turbine blade (W) is preferably the erosion shield or part thereof, in particular wherein the erosion shield or part thereof is the leading edge or a part thereof. Accordingly, the above method for repairing a wind turbine blade (W) preferably is a method comprising the following steps:
(i) identifying an at least partly damaged erosion shield or part thereof, in particular leading edge or a part thereof, of a wind turbine blade (W) that bears one or more damaged portions;
(ii) removing the at least partly damaged erosion shield or part thereof, in particular leading edge or a part thereof, identified in step (ii); and
(iii) replacing the removed at least partly damaged erosion shield or part thereof, in particular leading edge or a part thereof, by the respective erosion shield or part thereof, in particular leading edge or a part thereof, comprising or consisting of a polymer part P according to the present invention or a polymer part P obtainable from a method of the present invention; and
(iv) optionally tapering or fairing one or more edges and/or smoothing, dyeing and/or sealing of the surface of the wind turbine blade (W) or the repaired part thereof.

Step (i) of identifying an at least partly damaged assembly part of a wind turbine blade (W) is performed as identifying one or more damaged portions (e.g., spots, cavities, notches or chipped edges) of a wind turbine blade (W) as described above.

Removing (also: dismounting) the at least partly damaged assembly part according to step (ii) may be performed by any means in the art. The detailed procedural steps depend on the mounting of the respective assemble part. Exemplarily, the assembly part may be unfastened by unscrewing, dissolving an adhesive (e.g., by means of a solvent or solvent mixture), melting an adhesive (e.g., by means of heat, including plastic welding), excising the assembly part by cutting, grinding or sanding it from the remaining parts of the wind turbine blade (W), stripping it from the wind turbine blade (W) or a combination of two or more of the aforementioned. Cutting may be performed by any means suitible for this purpose. Exemplarily, cutting may be performed by means of a tool selected from the group consisting of a knife (including a (manual) cutter), a saw (including, e.g., a saw selected from the group consisting of a wire saw, a circular saw, a keyhole saw, a padsaw), a molding/rotary cutter, and a plane/slicer.

Likewise, the step of replacing the removed assembly part by its intact counterpart of step (iii) may be performed by any means known in the art and may be adapted to the specific characteristics of the assembly part comprising or consisting of a polymer part P. Exemplarily, it may be mounted by means of screwing, riveting, one or more adhesives, administering heat (e.g, by means of plastic welding), or a combination of two or more thereof. Smoothing according to step (iii) may also include removing excessive adhesive. Optionally, in an additional step (v), a potential gap (aerodynamic step) between the polymer part P and the remaining wind turbine blade (W) may be fired by means of one or more adhesives or one or more fillers and/or one or more sealants (e.g., 3M W2600 Edge Sealant). An adhesive may optionally be conducted as exemplified more in detail above in the context of the method for protecting a wind turbine blade (W) or part thereof by an erosion shield as laid out above.

As indicated above, the surface may be optionally be finished. This is described in more detail above.

It will be noted that the wind turbine blade (W) comprising a polymer part P of the present invention as such bears special beneficial characteristics such as improved weather resistance. Accordingly, a still further aspect of the present invention relates to a wind turbine blade (W) characterized in that said wind turbine blade (W) comprises the polymer part P of the present invention or the polymer part P obtainable from a method of the present invention.

As a wind turbine blade (W) bearing special beneficial characteristics also leads to a wind turbine which is technically beneficial. Therefore, a further aspect of the present invention relates to a wind turbine comprising a wind turbine blade (W) of the present invention.

As indicated above, the methods for repairing a wind turbine blade (W) according to the present invention may be performed by any means. Exemplarily, such method may be performed by means of a kit K, which may in principle also be used for other purposes.

A still further aspect of the present invention relates to kit K for protecting or repairing a wind turbine blade (W), in particular according a method of protecting and/or repairing as laid out above, said kit comprising:
a polymer part P according to the present invention or a polymer part P obtainable from a method of the present invention fitting into a damaged of the wind turbine blade (W), or a molding mass for preparing a polymer part P according to the present invention or a polymer part P obtainable from a method of the present invention fitting into a damaged portion of the wind turbine blade (W);
optionally an adhesive for fixing the polymer part P onto or into the spot, cavity, notch or chipped edge;
optionally one or more tools for mounting the polymer part P to the wind turbine blade (W) to be protected or repaired selected from the group consisting of trim scissors, brushes, wiper towels and abrasive means;
optionally a container in which the kit is packaged;
optionally a container in which the polymer part P is transportable;
optionally one or more means for surface finishing FI selected from the group consisting of dyes, sealing agents and polishing agents;
optionally one or more means for determining the size of the spot, cavity, notch or chipped edge to be filled or covered; and
optionally user instructions for protecting or repairing a wind turbine blade (W), in particular user instructions for conducting a method of the present invention.

The definitions and preferred embodiments as laid out above in the context of the polymer part P of the present invention and the methods for protecting and/or repairing a wind turbine blade (W) *mutatis mutandis* also apply to the kit K of the present invention.

A container in which the polymer part P is transportable or transported or may be useful for transportation, since many polymer parts P of the wind turbine blade (W) (e.g., erosion shields) are typically rather thin and the edges thereof are rather fragile and readily susceptible to damage.

The term "monomer" as used in the context of the present invention, in particular when forming part of the polymer part P of a wind turbine blade (W), should be understood as the monomer moiety (i.e., the reaction product of the respective monomer) included in the molecular structure of the respective (co)polymer. Likewise, the monomer bearing a functional group M-I will, in the polymer part P, preferably be present as the reaction product of M-I with the functional group G-I of the fibers F and *vice versa.*

The invention is further illustrated by the following Figures, examples and patent claims.

### Brief Description of the Figures

**Figure 1** shows a schematic of an example of a wind turbine blade (W). In an assembled wind turbine, the wing (1) is connected to the wind turbine's hub via its root part (2). The wing (1) bears a leading edge (3) and a trailing edge (4). The part of the wing that has the longest distance to the rotation axis in an assembled wind turbine (and thus bearing the highest rotation velocity) is the tip (5). In an assembled wind turbine, the direction of rotation is as indicated by the arrow (6). The dotted line is intended to provide a three-dimensional impression of the wind turbine blade (W). According to the present invention, at least a part of the wind turbine blade (W) is a polymer part P of the present invention.
**Figure 2** shows a schematic of a cross section (optical section from the apex of the leading edge (3) to the apex of the trailing edge (4)) of a non-limiting example of a setup of a wind turbine blade (W). In an assembled wind turbine, the direction of rotation is as indicated by the arrow (6). The outer surface of the wind turbine blade (W) may bear comprise an erosion shield (7) depicted in black that may be or comprise an assembly part (8) that comprises or consists of a polymer part P. As indicated above, particularly preferably the erosion shield (7) or parts thereof may be or comprise a polymer part P of the present invention. The interior (9a)-(9g) of the wind turbine blade (W) may optionally comprise one or more of the following assembly parts: one or more shear web elements (9a) which optionally bear a sandwich setup, one or more spar cap elements (9b), one or more molded parts (9c) providing the general shape, one or more hollow parts (internal cavities) (9d) connected or unconnected with another, an adhesive layer (9e) located between the erosion shield (7) or part thereof and a molded part (9c), one or more flanges (9f) (optionally load-carrying laminates), and/or one or more sandwich panels (9g) depicted as striped part). Each of the assembly parts of the wind turbine blade (W), in particular the erosion shield or a part thereof, may be a polymer part P of the present invention. It will be noticed that the schematic is not true to scale, but rather depicts the assembly parts clearly visible.
   Exemplarily, the molded parts (9c) and/or the erosion shield (7) may typically be thinner in reality. It will be noted that the exact shape may vary due to the specific type of wind turbine blade of interest. Likewise, exact shape may vary due to the specific position of the cross section, i.e., whether the Figure represents a cross- section near the root, within the mid span or near the tip of the wind turbine blade (W).
**Figure 3** shows a schematic of a cross section (optical section from the leading edge (3) to the trailing edge (4)) of an example of an optional erosion shield (7) of a wind turbine blade (W). The interior (9) of the wind turbine blade (W) is not depicted in detail and may optionally comprise one or more construction elements as depicted in Figure 2. Optionally, the erosion shield (7) may comprise one or more assembly parts (8) comprising a polymer part P of the present invention, preferably wherein such one or more assembly parts (8) are located at the leading edge (3) and/or at the trailing edge (4). It will be understood that the erosion shield (7) as depicted in this figure may be prepared during production of the wind turbine blade (W), may be completely or partly added to the wind turbine blade (W) subsequent to production, or may depict an erosion shield (7) after repairing the wind turbine blade (W) and optionally replacing parts thereof. In particular, one or both of the highlighted sections from the leading edge (3) and/or the section from the trailing edge (4) may optionally be mounted subsequent to production and/or may serve as a protective and/or repair part.
**Figure 4** shows a schematic of a cross section (optical section from the leading edge (3) to the trailing edge (4)) of another example of an optional erosion shield (7) of a wind turbine blade (W). The interior (9) of the wind turbine blade (W) is not depicted in detail and may optionally comprise one or more construction elements as depicted in Figure 2. Optionally, one or more assembly parts (8) comprising a polymer part P of the present invention may be placed on the surface of the erosion shield (7), preferably wherein such one or more assembly parts (8) are mounted at the leading edge (3) and/or the trailing edge (4). It will be understood that the erosion shield (7) as depicted in this figure may be prepared during production of the wind turbine blade (W), may be completely or partly added to the wind turbine blade (W) subsequent to production, or may depict an erosion shield (7) after repairing the wind turbine blade (W) and optionally replacing parts thereof. In particular, one or both of the highlighted sections from the leading edge (3) and/or the section from the trailing edge (4) may optionally be mounted subsequent to production and/or may serve as a protective and/or repair part.
**Figure 5** shows a schematic of possible damages and means for repairing such. As mentioned above, the edges, in particular the leading edges (3), are prone to damages due to mechanical strikes.
   One more strikes may lead to a chipped edge (10) that may be repaired by substitution of the chipped material by means of a polymer part P of the present invention which may be prepared *in situ* or *ex situ.* This may also be a(n) (leading) edge film or tape. A cavity (11) in the wind turbine blade (W) may be filled with a polymer part P which is a repair part (12) fitting into a damaged portion prepared *ex situ.* As laid out above, the dimensions of the cavity (11) may be determined before preparing the repair part (12) in order to achieve that the latter fits particularly well into the cavity (11). The polymer part P of the present invention may also be a prefabricated assembly part replacing a damaged assembly part of a wind turbine blade (W) or a segment thereof. As exemplified here, such prefabricated assembly part may be applied to the surface of the leading edge, in the typical use of an erosion shield (13) as indicated in black. This may provide protection to the leading edge (including repair parts thereof) and may have been completed on the leading edge surface. Such prefabricated assembly part may also be a segment of the leading edge (13) as indicated in black itself. A pit (14), notch (15) or cavity (16) in the outer surface of an erosion shield may be filled by a polymer part P of the present invention that may be prepared *in situ.* Optionally, such part may also be a protective film or tape. Alternatively, a damaged portion may also be excised from (e.g., cut out of) a wind turbine blade (W), in particular the erosion shield thereof. This may provide a cut cavity (17) of freely selectable dimensions. Such cut cavity (17) may be filled by a fitting repair segment (18) which may be prepared ex *situ* or may even be an prefabricated part. This may also comprise or be an erosion shield boot (19). Such bot may optionally also be produced as a single piece.

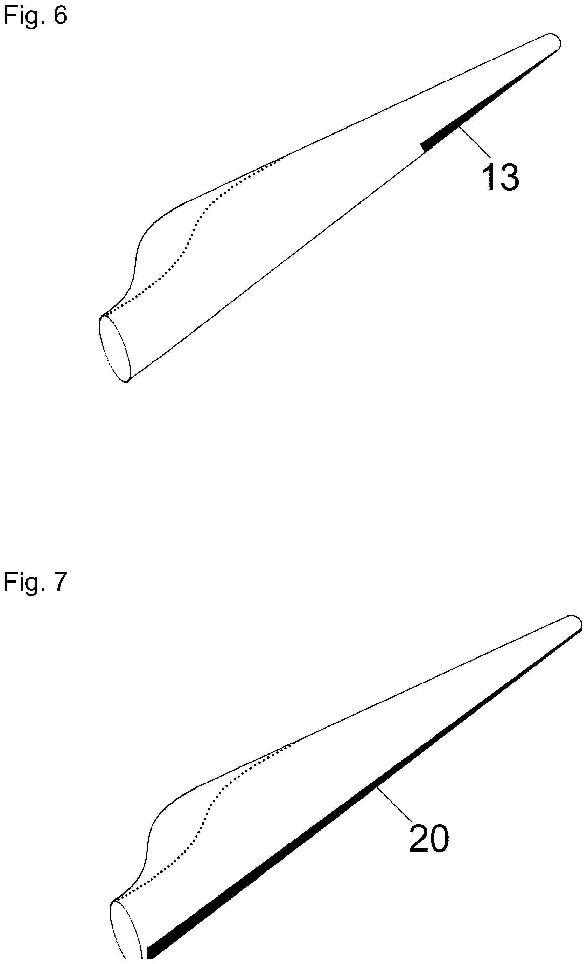

**Figure 6** shows a further schematic of an example of a wind turbine blade (W), wherein the tip region of the leading edge (here exemplarily the tip third of the leading edge) is protected by a segment of an erosion shield (13) as indicated in black. Optionally but not necessarily, the erosion shield (13) may become thinner towards the tip. The further properties of the wind turbine blade (W) are as indicated in Figure 1.
**Figure 7** shows a further schematic of an example of a wind turbine blade (W), wherein essentially the whole leading edge protected by an erosion shield (13) as indicated in black. Optionally but not necessarily, the whole-length erosion shield (20) may become thinner towards the tip. The further properties of the wind turbine blade (W) are as indicated in Figure 1.
**Figure 8** shows a schematic of (here: exemplarily seven) segments (21) (also: sections) of the leading edge and their cross-section profiles of leading edge curvature (22). These leading edge curvatures (22) each bear an apex (23) of the leading edge. Typically (as indicated here) but not necessarily, with increasing proximity to the tip of the wind turbine blade (W) the angle becomes increasingly acute, i.., thinner in width. As indicated in the description above, such (predetermined) profiles may be used to form corresponding sections of an erosion shield (13) *in situ,* typically but not necessarily by means of thermoforming. This may also bear an apex (23) having an underside (i.e., inner side) and an outer side. The further properties of the wind turbine blade (W) are as indicated in Figure 1.
**Figure 9** shows a segment of an erosion shield (13) that has been formed in order to fit onto an edge, in particular the leading edge, of a wind turbine blade (W). As indicated above, the curvature of the segment may be adapted to the leading edge curvature (22) of the respective segment as indicated in Figure 8. The segment of the erosion shield (13) then bears an outer surface (black) and an inner surface (white). This segment of an erosion shield (13) also bears an apex (23) having an underside (i.e., inner side, white) and an outer side (black). Such segment may be mounted onto an edge, in particular the leading edge (3), of a wind turbine blade (W). Then, the inner surface (white) may be treated with an adhesive layer that binds the erosion shield (13) with the remaining part of the wind turbine blade (W).
**Figure 10** shows a comb spreader tool (25) that may be used for providing an adhesive (24) to the inner surface (22) of the segment of an erosion shield (13) as depicted in Figure 9. The comb spreader tool (25) typically features several teeth (one example for a tooth indicated by (27)). The overall curvature of the comb spreader tool (25) may be adapted to the curvature of the respective segment of an erosion shield (13) to be mounted (and optionally essentially correspond to the leading edge curvature (23) as indicated in Figure 8). By using such comb spreader tool (25), a particularly well-defined thickness of the adhesive layer may be achieved. This is particularly well achieved when a strip of double sided adhesive tape (26) is applied to the underside(i.e., inner side) of the apex (23) of the erosion shield.

### Examples

### Example 1 Testing of weather resistance of ASA/PC blends

### Materials

Different test coupons based on glass-fiber reinforced plastic (GFRP) substrates were prepared to be tested:
Coupon LEP9: coupons coated with Mankiewicz LEP 9 (3-layer leading edge protection coating ALEXIT^{®} BladeRep LEP 9 (Mankiewicz Coatings LLC, Charleston SC, USA));
Coupon E: coupons coated with extruded Luran SC (INEOS Styrolution Group GmbH, Frankfurt am Main, Germany);
Coupon I: coupons coated with injection molded Luran SC (INEOS Styrolution Group GmbH, Frankfurt am Main, Germany); and
Coupon BF: coupons coated with Luran SC (INEOS Styrolution Group GmbH, Frankfurt am Main, Germany)

### Methods

### Preparation of Coupon LEP9s

A 3 ply thick E-Glass laminate was first infused with epoxy resin. SikaForce L7818-L7 was applied to a surface of the laminate and screeded to endure a flat surface. The surface was abraded once it was fully cured and cleaned with acetone using the two cloth method. The layers of LEP9 were then applied to the surface, with light abrading between layers. Once cured, the sheets were sent off site to be water-jet cut into circular coupons. The leading edge coupon was manufactured using the same procedure, just with a leading edge mold instead of a flat tool. Once the coating was applied to the leading edge coupon and was trimmed to size and the alignment holes were milled out.

### Preparation of the further coupons

The coupons E were prepared by extrusion of the Luran SC material. The coupons I were prepared by injection molding of the Luran SC material. The coupon BF did not bear any erosion shield.

### Testing of the coupons

A test speed of 135 ms⁻¹ was used. The test procedure used was based on ASTM standard G73-10 (version up to date in 2016). Before the arm was accelerated up to the testing speed, the droplet system was activated and allowed to stabilize. The timing of the test duration commenced once the arm started moving, and stopped when the arm came to rest. The arm took less than 5 seconds to reach the test speed and to come to complete stop at the end of the test. Each specimen was tested until the damage had penetrated through the filler material and the substrate becomes exposed. Due to intrinsic variability in rain erosion testing, a calibration coupon was periodically tested during the testing campaign to monitor the consistency of the erosion conditions being produced in the WARER. The resistance of the materials was recorded using mass loss measurements and comparison of visual appearance. Further, material abrasion was observed.

As used herein, the Whirling Arm Rain Erosion Rig (WARER) simulated rain erosion conditions that would be encountered by an object travelling at high speed through rain. A nominal rainfall rate of 25.4 mm/h (1 inch/h) was produced. Droplets were produced at a rate of 4 per second from 36 needles with a nominal diameter of 2 mm. These conditions were based upon standard DEF STAN 0035 (version up to date in 2016). Depending on the durability of the coupon that was tested, a test speed of up to 135 ms⁻¹ was used. The test coupon was mounted on the rotating arm at a radius of 0.6 m. The WARER could accommodate two coupon types. The disc coupons were circular with a diameter of 27 mm and were mounted in a bespoke holder. The leading edge (LE) coupons were 36 mm wide with a rounded front (internal radius of 5.9 mm). A flat surface (inclined at 22°) continued back from the rounded front to the flat fixture flange. A dovetail slider, fixed to the sample through six countersunk holes (3 top and bottom), aligned and secured the sample onto the end of the test arm.

### Results

The evolution of damage due to erosion was examined based on determining the mass loss and through visual examination of the coupon surface. Measurements were taken for all coupons up to the point of substrate exposure/spalling.

### a) Mass loss results

Mass loss was recorded using a Kern ABT 100-5M analytical balance, capable of measuring to 0.01 mg. A calibration weight was used throughout the testing to ensure that any creep in the balance's readings was taken into account. The respective coupons were first heated in an oven (Memmert UF55) to 60 °C overnight to remove any excess moisture. The coupons were placed in a desiccator while cooling to room temperature in order to limit any moisture uptake. Mass measurements were then recorded before each test. After each test interval, the coupons underwent the same heat/cool cycle, followed by further mass measurements, from which mass loss was calculated.

The average duration at which time point the coating had spalled from the surface is indicated as follows:

| | |
|---|---|
| Coupon LEP9: | 15 min |
| Coupon I: | 590 min |
| Coupon E: | 835 min |
| Coupon BF: | 300 min |

The average mass over time is depicted in the following Table I:

| Exposure time [min] | Coupon BF (average) | Coupon E (average) | Coupon I (average) | Coupon LEP9 |
|---|---|---|---|---|
| 0 | 1.9287 | 2.4071 | 2.4091 | (spalled after 15 min) |
| 60 | 1.9275 | 2.4050 | 2.3851 | - |
| 120 | 1.8861 | 2.3977 | 2.3474 | - |
| 180 | 1.8453 | 2.3729 | 2.3250 | - |
| 240 | 1.7969 | 2.3390 | 2.3072 | - |
| 300 | 1.7888 | 2.3086 | 2.2863 | - |
| 360 | 1.6904 | 2.2782 | 2.2649 | - |
| 420 | - | 2.2545 | 2.2349 | - |
| 480 | - | 2.2274 | 2.1819 | - |
| 540 | - | 2.2073 | 1.9991 | - |
| 600 | - | 2.1829 | 1.9972 | - |
| 660 | - | 2.1473 | 1.8655 | - |
| 720 | - | 2.0152 | 1.6308 | - |
| 780 | - | 2.1189 | - | - |
| 840 | - | 2.0115 | - | - |
| 900 | - | 1.8506 | - | - |
| 915 | - | 1.8732 | - | - |

The average duration showed that the coupon E performed best. Coupon I also performed well, coupon BF was also acceptable. In contrast, coupon LEP9 showed less desirable results. The incubation time was about 60 min for the coupon BF and 120 min for the coupon E. Erosion started occurring on the coupon I during the first interval. The rate of erosion on the coupons BF and E, once the incubation period was over, were consistent up to the point of substrate exposure. The erosion rates of the coupon I seemed to vary more and while it was initially high, it decreased between 180 min and 420 min before increasing up until the point of substrate exposure. The mass loss of the coupon LEP9 eroded comparably quickly. After duration of 15 min, the coating had spalled from the surface.

Once the erosion of the coupon I began the mass loss was constant from 120 min to 420 min, at which point the mass loss spiked for the remaining intervals up until the point of substrate exposure. The erosion of coupon E was constant from the end of incubation period forward until approximately 720 min, where the mass loss curve spiked as it did with the coupon I.

The mass loss results of the coupon BF indicated that there was an incubation period of approximately 50 min, at which point the mass increases sharply and remains constant until the point of substrate exposure. There was more scatter between coupons BF than with the other sample types tested.

### b) Visual Appearance

Each coupon was photographed after each test period using a Nikon D600 camera mounted on variable height stage with controlled lighting. The progression of damage to the coupon was tracked by this process. Once mounted in the test rig, the position of the coupon with respect to the falling droplets was on the centerline of the coupon. The highest concentration of droplet impacts occurs in the upper half of the coupon. This is the region which is typically eroded first.

The images confirmed the above results regarding mass loss. In the samples that bear a LEP9 coating (coupon LEP9), rapid erosion of the coating was observed after few minutes. After 15 min, the substrate exposed and the coating severely spalled. The LEP9 coating is designed to be applied in three layers; hence as the layers erode it will indicate how much protection remains on the blade. When exposed to the applied test conditions, the coating system was not eroded layer by layer as expected. This may indicated that the coating to substrate bond may be a weak point in the system and could be the main cause for the coating to spall off.

The surface of coupon I appeared slightly rough in the surface finish. It is assumed that surface roughness may be an influential factor on erosion resistance, as it may give the outward travelling water (travelling outwards form the point of impact) something to catch on. In the absence of this roughness, materials are expected to tend to have a longer incubation period. The damage of the coupon I has already started as soon as the first interval. However, coupon I showed an extensively intact coating for a long period of time. After 420 min and 480 min, respectively, the first clearly visible pits were observable. By analyzing the visual appearance, it became clear that erosion was shallow and consistent up until 420 min. After more than 9 h, the substrate exposed.

Also coupon E showed an extensively intact coating for a comparably long period of time. It showed a glossy and smooth surface that is assumed to be able to account for an particularly long incubation period. After 180 min and 240 min, respectively, the first clearly visible pits were observable. After more than 10 h (in average approximately 14 h) the substrate exposed. The erosion of this material was very shallow which hampered the erosion getting through the thickness of the material very quickly. The coupons E significantly outperformed all other coupons in this test campaign.

These coupons E lasted, on average, 835 min (~14 h), which is 2.8 times longer than the BF coupons. The incubation period of these samples is estimated at just under 120 min. The glossy, smooth surface can account for such a long incubation period.

Damage of the coupon BF on the surface was visible from the first interval, at 60 min. Coupon BF however showed an extensively intact coating until after 120 min and 180 min, respectively, the first clearly visible pits were observable. After more than 4 h, the substrate exposed. The damage was localized to the 12 o'clock position and there were some areas on the periphery which appeared un-eroded. This is a good sign of erosion resistance; however, the pieces of material that were being removed are relatively large and the erosion got through the thickness of the material.

The above results demonstrate that the ASA/PC blends, in particular when extruded, but also when injection molded, performed very well in comparison to common coating LEP9.

### Example 2 (Installation of an erosion shield for leading edge protection, LEP)

The erosion shield material (polymer part P) is designed for providing a set of hard shell erosion shields that are bonded to the repaired or undamaged leading edge of a wind turbine blade (W) to provide protection against erosion/further erosion. The theory behind the design of the erosion shield is that it extends around both sides of the separation point +/-10 cm at the apex of the leading edge in sectional lengths, nominally of 1 m. This example may refer to a process of fitting 3-4 erosion shield design plans on a large sheet, creating sufficient margins for the subsequent thermoforming process to be accurately completed, while optimizing efficient/cost-effective use of sheet material) thermoformed using specifically designed and produced tools/templates, into the requisite geometry for each sector/portion of the leading edge of a particular blade model, then CNC trimmed, then chamfered to create a shallow sloping angle along each longitudinal edge (for the purpose of optimizing aerodynamic performance).

Extruded sheets usable as erosion shield material:
Extruded sheets of an ASA-containing material (e.g., Luran SC or Luran S) of approximately 2 mm thickness are provided. These have a size of several hundred cm in length and width (e.g., 4 m x 3 m). The thickness is reduced to approximately 1 mm during thermoforming.

### Mounting of the erosion shield

Sheets of exemplarily 1 m x 20 cm (as will be understood, in the case of the ever larger blades larger sheets may be designed, produced and used (e.g. 2 m x 50 cm), as well as alternatively smaller sheets may be used instead) of the extruded sheets are prepared by cutting out of the extruded sheet. In other words, the previously prepared larger sheets of extruded Luran SC (e.g., 4 m x 3 m), have been divided into sectors to nest a number of erosion shield design layouts. Its shape is adapted to the geometry of the apex of the leading edge of the type of wind blade turbine (W). This is based on predetermined data of the surface geometry of the leading edge of the specific type/model of wind blade turbine (W). The erosion shield is then dry-fitted into position *in situ* to check for alignment with the leading edge surface. As far as necessary, the shape of the sheet, in particular the sheet's edges, may be further trimmed by CNC and/or manual trimming. The formed sheets may optionally be controlled by forming tools. If necessary, the outer edges of the shields may be chamfered/de-burred, by mechanical, manual or automated process, or otherwise modified, to create a shallow angle, which will ensure smooth transition from the blade surface to the shield surface.

The adapted and formed sheet (used as erosion shield) is then prepared for adhesion. In order to avoid air voids/cavities/air pockets in the adhesive layer, a strip of double sided adhesive tape of 1-2 cm width x 0.5 mm thickness is applied to the apex of the leading edge and the inner side of the erosion shield is pressed thereto. Then an adhesive (e.g., a 0.5 mm thick (or, potentially, another thickness) layer of a silicone adhesive) is applied to the inner side (underside) side of the erosion shield uniformly along the entire surface. This may be applied by a comb spreader tool suitible for each segment of the erosion shield. The double sided tape is excluded by design as depicted in Figure 10. Then, the erosion shield is pressed into position and excess adhesive is cleaned off. When the adhesive is hardened (i.e., tack free), the 1 mm thick edges may then be further tapered to ensure flush, aerodynamic flow from wind turbine blade surface to erosion shield surface.

If necessary, the tapered edges of the shield may additionally be filled using additional adhesive or filler to create a smooth transition of airflow across the joint between the blade/leading edge surface and the surface of the erosion shields. Finally, a sealant (e.g., 3M^{™} W2600 Edge Sealant) is applied to protect the joints and any adhesive from environmental conditions.

The erosion shield protection of the present invention is particularly weather-resistant, mechanically stable and efficiently usable.

## Claims

1. A polymer part P of a wind turbine blade (W) comprising:
(I) 20 to 100 wt.-% of a thermoplastic component T comprising:
(A) 10 to 90 wt.-% of at least one thermoplastic copolymer matrix A comprising:
(A1) 50 to 95 wt.-%, related to the thermoplastic copolymer matrix A, of at least one monomer A1 selected from the group consisting of styrene, alpha-methylstyrene and mixtures thereof; and
(A2) 5 to 50 wt.-%, related to the thermoplastic copolymer matrix A, of at least one monomer A2 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids, wherein optionally one or more of the monomers A2 may bear a functional group M-I, wherein the functional group M-I is selected from the group consisting of anhydrides of unsaturated carboxylic acids, copolymerizable maleimide derivative, tert.-butyl-(meth)acrylate, and glycidyl(meth)acrylate; and
(B) 10 to 90 wt.-% of at least one graft copolymer B comprising:
(B1) at least one graft base B1 having a glass transition temperature Tg below -20°C, wherein the graft base B1 is obtained by emulsion polymerization and comprises:
(B11)40 to 100 wt.-%, related to the graft base B1, of at least one C₁-C₈-alkyl(meth)acrylate as monomer B11;
(B12)0 to 20 wt.-%, related to the graft base B1, of at least one poly-functional cross-linking monomer B12; and
(B13)0 to 40 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, and methyl vinyl ether,
where the sum of B11, B12 and B13 equals 100 wt.-%; and
(B2) at least one graft shell B2 comprising at least one monomer B21 which is obtained via emulsion polymerization, in the presence of at least one graft base B1 which comprises:
(B21)50 to 100 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
(B22)0 to 50 wt.-%, related to the graft shell B2, of at least one monomer B22 selected from the group consisting of acrylonitrile or mixtures of acrylonitrile and at least one further monomer selected from the group consisting of methacrylonitrile, acrylamide, methyl vinyl ether, anhydrides of unsaturated carboxylic acids and imides of unsaturated carboxylic acids;
(II) 0 to 80 wt.-% of one or more fibers F, optionally comprising at their surface, a functional group G-I forming a covalent bond with the functional group M-I of a monomer A2;
(III) 0 to 80 wt.-% of one or more polycarbonates;
(IV) 0 to 50 wt.-% of one or more further (co)polymers; and
(V) 0 to 10 wt.-% of one or more polymer additives.

2. The polymer part P of claim 1, where the thermoplastic component T comprises:
(A) 40 to 90 wt.-%, in particular 50 to 90 wt.-%, of the at least one thermoplastic copolymer matrix A, comprising:
(A1) 50 to 95 wt.-%, preferably 60 to 90 wt.-%, in particular 60 to 85 wt.-%, related to the total mass of copolymer matrix A, of at least one monomer A1; and
(A2) 5 to 50 wt.-%, preferably 10 to 40 wt.-%, in particular 15 to 40 wt.-%, related to the copolymer matrix A, of at least one monomer A2; and
(B) 10 to 60 wt.-%, in particular 10 to 50 wt.-%, of the at least one graft copolymer B comprising:
(B1) 50 to 90 wt.-%, preferably 55 to 90 wt.-%, in particular 55 to 65 wt.-%, related to the graft copolymer B, of at least one graft base B1; and
(B2) 10 to 50 wt.-%, preferably 10 to 45 wt.-%, in particular 35 to 45 wt.-%, related to the graft copolymer B, of at least one graft shell.

3. The polymer part P of any of claims 1 or 2, wherein in the thermoplastic copolymer matrix A comprises (or consists) of:
(A1) the monomer A1, which is styrene; and
(A2) the one or more monomers A2 are selected from the group consisting of acrylonitrile and mixtures of acrylonitrile and anhydrides of unsaturated carboxylic acids and imides of unsaturated carboxylic acids, preferably selected from the group consisting of acrylonitrile and mixtures of acrylonitrile and anhydrides of unsaturated carboxylic acids, in particular selected from the group consisting of acrylonitrile and mixtures of acrylonitrile and maleic anhydride.

4. The polymer part P of any of claims 1 to 3, wherein the graft copolymer B is characterized at least in one of the following:
the graft base B1 comprises:
(B11)70 to 99.9 wt.-%, preferably 79.9 to 99.5 wt.-%, more preferably 87.5 to 99 wt.-%, related to the graft base B1, of at least one C₁-C₈-alkyl(meth)acrylate, preferably selected from butyl acrylate and ethylhexyl acrylate, in particular n-butyl acrylate, as monomer B11;
(B12)0.1 to 10 wt.-%, preferably 0.1 to 5 wt.-%, more preferably 1 to 2.5 wt.-%, related to the graft base B1, of at least one poly-functional cross-linking monomer B12, preferably selected from the group consisting of allyl(meth)acrylate, divinylbenzene, diallyl maleate, diallyl fumarate, diallyl phthalate, triallylcyanurat, triallyl isocyanurate and dicyclopentadienyl acrylate (DCPA); and
(B13)0 to 29.5 wt.-%, preferably 0 to 20 wt.-%, more preferably 0 to 10 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, methyl vinyl ether,
where the sum of B11, B12 and B13 equals 100 wt.-%; and/or
the graft shell B2 comprises:
(B21)50 to 95 wt.-%, preferably 65 to 80 wt.-%, in particular 75 to 80 wt.-%, related to the graft shell B2, of a monomer B21 selected from the group consisting of styrene, alpha-methylstyrene and mixtures of styrene and at least one further monomer selected from the group consisting of alpha-Methylstyrene, p-Methylstyrene and C₁-C₈-alkyl(meth)acrylate; and
(B22) 5 to 50 wt.-%, preferably 20 to 35 wt.-%, in particular 20 to 25 wt.-%, related to the graft shell B2, of at least one monomer B22 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids.

5. The polymer part P of any of claims 1 to 4, **characterized in that**:
(a) the fibers F are selected from glass fibers, carbon fibers, aramid fibers and basaltic fibers, in particular wherein the fibers F are glass fibers; and/or
(b) the polycarbonate is an aromatic polycarbonate, in particular a bisphenol A based polycarbonate.

6. The polymer part P of any of claims 1 to 5, wherein the polymer part P comprises:
(a) the reaction products of anhydrides of unsaturated carboxylic acids as functional groups M-I of the monomer A2 and functional groups G-I at the surface of the fibers F selected from the group consisting of hydroxy, ester and amino groups which can react with M-I; and/or
(b) as further component (IV) at least one (co)polymer selected from the group consisting of polyolefins, polyesters, polyamides, poly(p-phenylene oxide), polyphenylene sulphide, poly(methyl methacrylate), poly(methacrylamide), styrene maleic anhydride, polyethers, polyimides and polyoxymethylene.

7. The polymer part P of any of claims 1 to 6, wherein the part P comprises:
(I) 40 to 100 wt.-%, preferably 50 to 100 wt.-%, in particular 60 to 99.9 wt.-%, of a thermoplastic component T;
(II) 0 to 60 wt.-%, preferably 0 to 50 wt.-%, in particular 1 to 40 wt.-%, of one or more fibers F;
(III) 0 to 30 wt.-%, preferably 0 to 25 wt.-%, in particular 0 to 20 wt.-%, of one or more polycarbonates;
(IV) 0 to 30 wt.-%, preferably 0 to 20 wt.-%, in particular 0 to 10 wt.-%, of one or more further (co)polymers; and
(V) 0 to 10 wt.-%, preferably 0 to 8 wt.-%, in particular 0.1 to 5 wt.-%, of one or more polymer additives.

8. The polymer part P of any of claims 1 to 7, wherein the polymer part P is **characterized by** one or more of the following features:
polymer part P is located at the outer face of a wind turbine blade (W);
polymer part P is a leading edge of a wind turbine blade (W) or segment thereof;
polymer part P is a segment located in the tip half of a wind turbine blade (W) subjected to high circular velocity when the wind turbine rotates;
polymer part P is an erosion shield of a wind turbine blade (W) or a part thereof;
polymer part P is a prefabricated assembly part replacing a damaged assembly part of a wind turbine blade (W) or a segment thereof;
polymer part P is a repair part fitting into a damaged portion of a wind turbine blade (W) prepared ex *situ,* or
polymer part P is formed in or on a damaged portion of a wind turbine blade (W) *in situ.*

9. The polymer part P of any of claims 1 to 8 wherein the part P comprises:
(I) 60 to 99.9 wt.-% of a thermoplastic component T comprising:
(A) 50 to 90 wt.-%, of at least one thermoplastic copolymer matrix A comprising:
(A1) 60 to 85 wt.-%, related to the total mass of thermoplastic copolymer matrix A, of styrene; and
(A2) 15 to 40 wt.-%, related to the thermoplastic copolymer matrix A, of a monomer A2 selected from the group consisting of acrylonitrile and mixtures of acrylonitrile and anhydrides of unsaturated carboxylic acids, wherein the anhydrides of unsaturated carboxylic acids bear a functional group M-I, , in particular wherein A2 is selected from the group consisting of acrylonitrile and mixtures of acrylonitrile and maleic anhydride; and
(B) 10 to 50 wt.-%, of at least one graft copolymer B comprising:
(B1) 50 to 90 wt.-%, preferably 55 to 90 wt.-%, in particular 55 to 65 wt.-%, related to the graft copolymer B, of at least one graft base B1 having a glass transition temperature Tg below -20°C which is obtained by emulsion polymerization comprises:
(B11) 87.5 to 99 wt.-%, related to the graft base B1, of butyl acrylate, ethylhexyl acrylate or a combination thereof, in particular n-butyl acrylate, as monomer B11, as monomer B11;
(B12) 1 to 2.5 wt.-%, related to the graft base B1, of at least one poly-functional cross-linking monomer B12, preferably selected from the group consisting of allyl(meth)acrylate, divinylbenzene, diallyl maleate, diallyl fumarate, diallyl phthalate, triallylcyanurat, triallyl isocyanurate and dicyclopentadienyl acrylate (DCPA);
(B13) 0 to 10 wt.-%, related to the graft base B1, of at least one further monomer selected from the group consisting of styrene, alpha-methylstyrene, C₁-C₄-alkylstyrene, acrylonitrile, methacrylonitrile, isoprene, butadiene, chloroprene, methyl methacrylate, alkylene glycol-di(meth)acrylate, and methyl vinyl ether,
where the sum of B11, B12 and B13 equals 100 wt.-%; and
(B2) 10 to 50 wt.-%, preferably 10 to 45 wt.-%, in particular 35 to 45 wt.-%, related to the graft copolymer B, of at least one graft shell B2 which is obtained via emulsion polymerization in the presence of at least one graft base B1comprises:
(B21)75 to 80 wt.-%, related to the graft shell B2, of a monomer B21 selected from the group consisting of styrene, alpha-methylstyrene and mixtures of styrene and at least one further monomer selected from the group consisting of alpha-methylstyrene, p-methylstyrene and C₁-C₈-alkyl(meth)acrylate; and
(B22)20 to 25 wt.-%, related to the graft shell B2, of at least one monomer B22 selected from the group consisting of acrylonitrile and mixtures of acrylonitrile and at least one further monomer selected from the group consisting of methacrylonitrile, acrylamide, methyl vinyl ether, anhydrides of unsaturated carboxylic acids and imides of unsaturated carboxylic acids;
(II) 0 to 40 wt.-% of one or more fibers F, preferably fibers F selected from glass fibers, carbon fibers, aramid fibers and basaltic fibers, in particular glass fibers, optionally comprising, at their surface, a functional group G-I forming a covalent bond with the functional group M-I of a monomer A2; and
(III) 0 to 20 wt.-% of aromatic polycarbonate, in particular bisphenol A;
(IV) 0 to 10 wt.-% of one or more further (co)polymers selected from the group consisting of polyolefins, polyesters, polyamides, poly(p-phenylene oxide), polyphenylene sulphide, poly(methyl methacrylate), poly(methacrylamide), styrene maleic anhydride, polyethers, polyimides, and polyoxymethylene; and
(V) 0.1 to 5 wt.-% of one or more polymer additives.

10. A method for preparing a polymer part P according to any of claims 1 to 9 comprising at least one step selected from the group consisting of extrusion of a sheet followed by thermoforming, injection molding, rotational molding, extrusion blow molding, 3D printing, pressure forming, vacuum forming, drape forming, or a combination of two or more thereof.

11. A method for protecting a wind turbine blade (W) or part thereof by an erosion shield comprising or consisting of the polymer part P of any of claims 1 to 9 or a polymer part P obtainable from a method of claim 10, said method comprising the following steps:
(i) determining the dimensions of the wind turbine blade (W) or part thereof to be protected, optionally by means of performing a 3D scan;
(ii) preparing the erosion shield comprising or consisting of a polymer part P according to any of claims 1 to 9 or a polymer part P obtainable from a method of claim 10 fitting onto wind turbine blade (W) or part thereof having the dimensions determined in step (i); and
(iii) mounting the erosion shield prepared in step (ii) onto wind turbine blade (W) or part thereof, optionally combined with one or more adhesives and/or by means of plastic welding; and
(iv) optionally tapering or fairing one or more edges and/or smoothing, dyeing and/or sealing of the surface of the erosion shield.

12. A method for repairing a wind turbine blade (W), said method comprising the following steps:
(i) identifying one or more damaged portions of a wind turbine blade (W), and optionally cutting, grinding or sanding out segments that bear the damaged portions from the wind turbine blade (W) thereby obtaining at least one cavity or notch in the wind turbine blade (W);
(ii) covering or filling the spot, cavity, notch or chipped edge of step (i) with a polymer part P according to any of claims 1 to 9 or a polymer part P obtainable from a method of claim 10, wherein the polymer part P is prepared by:
(a) an ex *situ* process comprising the following steps:
(a-i) determining the dimensions of the damaged portion of step (i), optionally by means of performing a 3D scan;
(a-ii) preparing a polymer part P according to any of claims 1 to 9 or a polymer part P obtainable from a method of claim 10 fitting onto or into the spot, cavity, notch or chipped edge having the dimensions determined in step (a-i); and
(a-iii) mounting the polymer part P prepared in step (a-ii) onto or into the damaged portion of step, optionally combined with one or more adhesives and/or by means of plastic welding; or
(b) an *in situ* process comprising the step of curing the wind turbine blade (W) with melt comprising the components of polymer part P as defined in any of claims 1 to 9, optionally by means of plastic welding; and
(iii) optionally tapering or fairing one or more edges and/or smoothing, dyeing and/or sealing of the surface of the wind turbine blade (W) or the repaired part thereof.

13. A method for repairing a wind turbine blade (W), said method comprising the following steps:
(i) identifying an at least partly damaged assembly part of a wind turbine blade (W) that bears one or more damaged portions;
(ii) removing the at least partly damaged assembly part identified in step (ii); and
(iii) replacing the removed at least partly damaged assembly part by the respective assembly parts comprising or consisting of a polymer part P according to any of claims 1 to 9 or a polymer part P obtainable from a method of claim 10; and
(iv) optionally tapering or fairing one or more edges and/or smoothing, dyeing and/or sealing of the surface of the wind turbine blade (W) or the repaired part thereof.

14. A wind turbine blade (W) **characterized in that** said wind turbine blade (W) comprises the polymer part P of any of claims 1 to 9 or the polymer part P obtainable from a method of claim 10, and/or **in that** it is obtainable from a method of any of claims 11 to 13.

15. A wind turbine comprising a wind turbine blade (W) of claim 14.

16. A kit K for protecting or repairing a wind turbine blade (W), in particular according a method of any of claim 11 to 13, said kit comprising:
a polymer part P according to any of claims 1 to 9 or a polymer part P obtainable from a method of claim 10 fitting into a damaged of the wind turbine blade (W), or a molding mass for preparing a polymer part P according to any of claims 1 to 9 or a polymer part P obtainable from a method of claim 10 fitting into a damaged portion of the wind turbine blade (W);
optionally an adhesive for fixing the polymer part P onto or into the spot, cavity, notch or chipped edge;
optionally one or more tools for mounting the polymer part P to the wind turbine blade (W) to be protected or repaired selected from the group consisting of trim scissors, brushes, wiper towels and abrasive means;
optionally a container in which the kit is packaged;
optionally a container in which the polymer part P is transportable;
optionally one or more means for surface finishing FI selected from the group consisting of dyes, sealing agents and polishing agents;
optionally one or more means for determining the size of the spot, cavity, notch or chipped edge to be filled or covered; and
optionally user instructions for protecting or repairing a wind turbine blade (W), in particular user instructions for conducting a method of any one of claims 11 to 13.

## Patentansprüche

1. Polymerteil P eines Windradflügels (W) umfassend:
(I) 20 bis 100 Gew.-% einer thermoplastischen Komponente T umfassend:
(A) 10 bis 90 Gew.-% von mindestens einer thermoplastischen Copolymermatrix A umfassend:
(A1) 50 bis 95 Gew.-%, bezogen auf die thermoplastische Copolymermatrix A, von mindestens einem Monomer A1 ausgewählt aus der Gruppe bestehend aus Styrol, alpha-Methylstyrol und Mischungen davon; und
(A2) 5 bis 50 Gew.-%, bezogen auf die thermoplastische Copolymermatrix A, von mindestens einem Monomer A2 ausgewählt aus der Gruppe bestehend aus Acrylnitril und Mischungen von Acrylnitril und mindestens einem weiteren Monomer ausgewählt aus der Gruppe bestehend aus Methacrylnitril, Acrylamid, Methylvinylether, Anhydriden von ungesättigten Carboxylsäuren und Imiden von ungesättigten Carboxylsäuren, wobei optional ein oder mehrere der Monomere A2 eine funktionale Gruppe M-I aufweisen, wobei die funktionale Gruppe M-I ausgewählt ist aus der Gruppe bestehend aus Anhydriden von ungesättigten Carboxylsäuren, copolymerisierbaren Maleinmide-Derivaten, tert.-Butyl-(meth)acrylat und Glycidyl(meth)acrylat; und
(B) 10 bis 90 Gew.-% von mindestens einem Pfropfcopolymer B umfassend:
(B1) mindestens eine Pfropfgrundlage B1 mit einer Glasübergangstemperatur Tg unter -20°C, wobei die Pfropfgrundlage B1 durch Emulsionspolymerisation erhalten wird und umfasst:
(B11) 40 bis 100 Gew.-%, bezogen auf die Pfropfgrundlage B1, von mindestens einem C₁-C₈-Alkyl(meth)acrylat als Monomer B11;
(B12) 0 bis 20 Gew.-%, bezogen auf die Pfropfgrundlage B1, von mindestens einem polyfunktionalen, quervernetzenden Monomer B12; und
(B13) 0 bis 40 Gew.-%, bezogen auf die Pfropfgrundlage B1, von mindestens einem weiteren Monomer ausgewählt aus der Gruppe bestehend aus Styrol, Alpha-Methylstyrol, C₁-C₄-Alkylstyrol, Acrylnitril, Methacrylnitril, Isopren, Butadien, Chloropren, Methylmethacrylat, Alkylen-Glycol-di(meth)acrylat und Methylvinylether,
wobei die Summe an B11, B12 und B13 100 Gew.-% entspricht; und
(B2) mindestens eine Pfropfhülle B2 umfassend mindestens ein Monomer B21, das mittels Emulsionspolymerisation erhalten wird, in der Gegenwart von mindestens einer Pfropfgrundlage B1, umfassend:
(B21) 50 bis 100 Gew.-%, bezogen auf die Pfropfhülle B2, von einem Monomer B21 ausgewählt aus der Gruppe bestehend aus Styrol, alpha-Methylstyrol und Mischungen von Styrol und mindestens einem weiteren Monomer ausgewählt aus der Gruppe bestehend aus alpha-Methylstyrol, p-Methylstyrol und C₁-C₈-Alkyl(meth)acrylat; und
(B22) 0 bis 50 Gew.-%, bezogen auf die Pfropfhülle B2, von mindestens einem Monomer B22 ausgewählt aus der Gruppe bestehend aus Acrylnitril oder Mischungen von Acrylnitril und mindestens einem weiteren Monomer ausgewählt aus der Gruppe bestehend aus Methacrylnitril, Acrylamid, Methylvinylether, Anhydriden von ungesättigten Carboxylsäuren und Imiden von ungesättigten Carboxylsäuren;
(II) 0 bis 80 Gew.-% einer oder mehrerer Fasern F, optional umfassend an ihrer Oberfläche, eine funktionale Gruppe G-I, die eine kovalente Bindung mit der funktionalen Gruppe M-I von einem Monomer A2 ausbildet;
(III) 0 bis 80 Gew.-% eines oder mehrerer Polycarbonate;
(IV) 0 bis 50 Gew.-% eines oder mehrerer weitere (Co)-Polymere; und
(V) 0 bis 10 Gew.-% eines oder mehrerer Polymeradditive.

2. Polymerteil P nach Anspruch 1, wobei die thermoplastische Komponente T umfasst:
(A) 40 bis 90 Gew.-%, insbesondere 50 bis 90 Gew.-%, von der mindestens einer thermoplastischen Copolymermatrix A, umfassend:
(A1) 50 bis 95 Gew.-%, bevorzugt 60 bis 90 Gew.-%, insbesondere 60 bis 85 Gew.-%, bezogen auf die Gesamtmasse an Copolymermatrix A, von mindestens einem Monomer A1; und
(A2) 5 bis 50 Gew.-%, bevorzugt 10 bis 40 Gew.-%, insbesondere 15 bis 40 Gew.-%, bezogen auf die Copolymermatrix A, von mindestens einem Monomer A2; und
(B) 10 bis 60 Gew.-%, insbesondere 10 bis 50 Gew.-%, von dem mindestens einen Pfropfcopolymer B umfassend:
(B1) 50 bis 90 Gew.-%, bevorzugt 55 bis 90 Gew.-%, insbesondere 55 bis 65 Gew.-%, bezogen auf das Pfropfcopolymer B, von mindestens einer Pfropfgrundlage B1; und
(B2) 10 bis 50 Gew.-%, bevorzugt 10 bis 45 Gew.-%, insbesondere 35 bis 45 Gew.-%, bezogen auf das Pfropfcopolymer B, von mindestens einer Pfropfhülle.

3. Polymerteil P nach einem der Ansprüche 1 oder 2, wobei die thermoplastische Copolymermatrix A umfasst (oder besteht aus):
(A1) dem Monomer A1, das Styrol ist; und
(A2) dem einen oder den mehreren Monomeren A2, ausgewählt aus der Gruppe bestehend aus Acrylnitril und Mischungen von Acrylnitril und Anhydriden von ungesättigten Carboxylsäuren und Imiden von ungesättigten Carboxylsäuren, bevorzugt ausgewählt aus der Gruppe bestehend aus Acrylnitril und Mischungen von Acrylnitril und Anhydriden von ungesättigten Carboxylsäuren, insbesondere ausgewählt aus der Gruppe bestehend aus Acrylnitril und Mischungen von Acrylnitril und Maleinanhydrid.

4. Polymerteil P nach einem der Ansprüche 1 bis 3, wobei das Pfropfcopolymer B durch mindestens eines des Folgenden charakterisiert ist:
die Pfropfgrundlage B1 umfasst:
(B11) 70 bis 99,9 Gew.-%, bevorzugt 79,9 bis 99,5 Gew.-%, stärker bevorzugt 87,5 bis 99 Gew.-%, bezogen auf die Pfropfgrundlage B1, von mindestens einem C₁-C₈-Alkyl(meth)acrylat, bevorzugt ausgewählt aus Butylacrylat und Ethylhexylacrylat, insbesondere n-Butylacrylat, als Monomer B11;
(B12) 0,1 bis 10 Gew.-%, bevorzugt 0,1 bis 5 Gew.-%, stärker bevorzugt 1 bis 2,5 Gew.-%, bezogen auf die Pfropfgrundlage B1, von mindestens einem polyfunktionalen quervernetzenden Monomer B12, bevorzugt ausgewählt aus der Gruppe bestehend aus Allyl(meth)acrylat, Divinylbenzol, Diallylmaleat, Diallylfumarat, Diallylphthalat, Triallylcyanurat, Triallylisocyanurat und Dicyclopentadienylacrylat (DCPA); und
(B13) 0 bis 29,5 Gew.-%, bevorzugt 0 bis 20 Gew.-%, stärker bevorzugt 0 bis 10 Gew.-%, bezogen auf die Pfropfgrundlage B1, von mindestens einem weiteren Monomer ausgewählt aus der Gruppe bestehend aus Styrol, alpha-Methylstyrol, C₁-C₄-Alkylstyrol, Acrylnitril, Methacrylnitril, Isopren, Butadien, Chloropren, Methylmethacrylat, Alkylenglycol-di(meth)acrylat, Methylvinylether,
wobei die Summe an B11, B12 und B13 100 Gew.-% entspricht; und/oder
die Pfropfhülle B2 umfasst:
(B21) 50 bis 95 Gew.-%, bevorzugt 65 bis 80 Gew.-%, insbesondere 75 bis 80 Gew.-%, bezogen auf die Pfropfhülle B2, von einem Monomer B21 ausgewählt aus der Gruppe bestehend aus Styrol, alpha-Methylstyrol und Mischungen von Styrol und mindestens einem weiteren Monomer ausgewählt aus der Gruppe bestehend aus alpha-Methylstyrol, p-Methylstyrol und C₁-C₈-Alkyl(meth)acrylat; und
(B22) 5 bis 50 Gew.-%, bevorzugt 20 bis 35 Gew.-%, insbesondere 20 bis 25 Gew.-%, bezogen auf die Pfropfhülle B2, von mindestens einem Monomer B22 ausgewählt aus der Gruppe bestehend aus Acrylnitril und Mischungen von Acrylnitril und mindestens einem weiteren Monomer ausgewählt aus der Gruppe bestehend aus Methacrylnitril, Acrylamid, Methylvinylether, Anhydriden von ungesättigten Carboxylsäuren und Imiden von ungesättigten Carboxylsäuren.

5. Polymerteil P nach einem der Ansprüche 1 bis 4, **dadurch gekennzeichnet, dass**:
(a) die Fasern F ausgewählt sind aus Glasfasern, Carbonfasern, Aramidfasern und basaltischen Fasern, insbesondere wobei die Fasern F Glasfasern sind; und/oder
(b) das Polycarbonat ein aromatisches Polycarbonat, insbesondere a Bisphenol A-basiertes Polycarbonat ist.

6. Polymerteil P nach einem der Ansprüche 1 bis 5, wobei das Polymerteil P umfasst:
(a) die Reaktionsprodukte von Anhydriden von ungesättigten Carboxylsäuren als funktionalen Gruppen M-I von dem Monomer A2 und funktionalen Gruppen G-I an der Oberfläche von den Fasern F ausgewählt aus der Gruppe bestehend aus Hydroxy-, Ester- und AminoGruppen, die mit M-I reagieren können; und/oder
(b) als weitere Komponente (IV) mindestens ein (Co-)Polymer ausgewählt aus der Gruppe bestehend aus Polyolefinen, Polyestern, Polyamiden, Poly(p-phenylenoxid), Polyphenylensulphid, Poly(methylmethacrylat), Poly(methacrylamid), Styrolmaleinanhydrid, Polyethern, Polyimiden und Polyoxymethylen.

7. Polymerteil P nach einem der Ansprüche 1 bis 6, wobei das Teil P umfasst:
(I) 40 bis 100 Gew.-%, bevorzugt 50 bis 100 Gew.-%, insbesondere 60 bis 99,9 Gew.-%, von einer thermoplastischen Komponente T;
(II) 0 bis 60 Gew.-%, bevorzugt 0 bis 50 Gew.-%, insbesondere 1 bis 40 Gew.-%, von einer oder mehreren Fasern F;
(III) 0 bis 30 Gew.-%, bevorzugt 0 bis 25 Gew.-%, insbesondere 0 bis 20 Gew.-%, von einem oder mehreren Polycarbonaten;
(IV) 0 bis 30 Gew.-%, bevorzugt 0 bis 20 Gew.-%, insbesondere 0 bis 10 Gew.-%, von einem oder mehreren weiteren (Co-)Polymeren; und
(V) 0 bis 10 Gew.-%, bevorzugt 0 bis 8 Gew.-%, insbesondere 0,1 bis 5 Gew.-%, von einem oder mehreren Polymeradditiven.

8. Polymerteil P nach einem der Ansprüche 1 bis 7, wobei das Polymerteil P durch ein oder mehr der folgenden Merkmale gekennzeichnet ist:
Polymerteil P befindet sich an der Außenfläche eines Windradflügel (W);
Polymerteil P ist eine Vorderkante eines Windradflügels (W) oder ein Segment davon;
Polymerteil P ist ein Segment, das sich in der Spitzenhälfte eines Windradflügels (W) befindet, die einer hohen Umlaufgeschwindigkeit ausgesetzt ist, wenn sich die Windturbine dreht;
Polymerteil P ist ein Erosionsschutz eines Windradflügels (W) oder ein Teil davon;
Polymerteil P ist ein vorgefertigtes Montageteil, das ein beschädigtes Montageteil eines Windradflügels (W) oder eines Segments davon ersetzt;
Polymerteil P ist ein Reparaturteil, das in einen beschädigten Abschnitt eines Windradflügels (W) passt, das ex *situ* hergestellt wurde; oder
Polymerteil P wird in oder an einem beschädigten Teil eines Windradflügels (W) *in situ* geformt.

9. Polymerteil P nach einem der Ansprüche 1 bis 8 wobei das Teil P umfasst:
(I) 60 bis 99,9 Gew.-% von einer thermoplastischen Komponente T umfassend:
(A) 50 bis 90 Gew.-% von mindestens einer thermoplastischen Copolymermatrix A umfassend:
(A1) 60 bis 85 Gew.-%, bezogen auf die Gesamtmasse an thermoplastischer Copolymermatrix A, von Styrol; und
(A2) 15 bis 40 Gew.-%, bezogen auf die thermoplastische Copolymermatrix A, von einem Monomer A2 ausgewählt aus der Gruppe bestehend aus Acrylnitril und Mischungen von Acrylnitril und Anhydriden von ungesättigten Carboxylsäuren, wobei die Anhydride von ungesättigten Carboxylsäuren eine funktionale Gruppe M-I aufweisen, insbesondere wobei A2 ausgewählt ist aus der Gruppe bestehend aus Acrylnitril und Mischungen von Acrylnitril und Maleinanhydrid; und
(B) 10 bis 50 Gew.-%, von mindestens einem Pfropfcopolymer B umfassend:
(B1) 50 bis 90 Gew.-%, bevorzugt 55 bis 90 Gew.-%, insbesondere 55 bis 65 Gew.-%, bezogen auf die Pfropfcopolymer B, von mindestens einer Pfropfgrundlage B1 mit einer Glasübergangstemperatur Tg unter -20°C, die mittels Emulsionspolymerisation erhalten wird, umfassend:
(B11) 87,5 bis 99 Gew.-%, bezogen auf die Pfropfgrundlage B1, von Butylacrylat, Ethylhexylacrylat oder einer Kombination davon, insbesondere n-Butylacrylat, als Monomer B11, als Monomer B11;
(B12) 1 bis 2,5 Gew.-%, bezogen auf die Pfropfgrundlage B1, von mindestens einem polyfunktionalen quervernetzenden Monomer B12, bevorzugt ausgewählt aus der Gruppe bestehend aus Allyl(meth)acrylat, Divinylbenzol, Diallylmaleat, Diallylfumarat, Diallylphthalat, Triallylcyanurat, Triallylisocyanurat und Dicyclopentadienylacrylat (DCPA);
(B13) 0 bis 10 Gew.-%, bezogen auf die Pfropfgrundlage B1, von mindestens einem weiteren Monomer ausgewählt aus der Gruppe bestehend aus Styrol, alpha-Methylstyrol, C₁-C₄-Alkylstyrol, Acrylnitril, Methacrylnitril, Isopren, Butadien, Chloropren, Methylmethacrylat, Alkylenglycoldi(meth)acrylat und Methylvinylether,
wobei die Summe von B11, B12 und B13 100 Gew.-% entspricht; und
(B2) 10 bis 50 Gew.-%, bevorzugt 10 bis 45 Gew.-%, insbesondere 35 bis 45 Gew.-%, bezogen auf die Pfropfcopolymer B, von mindestens einer Pfropfhülle B2, die mittels Emulsionspolymerisation in der Gegenwart von mindestens einer Pfropfgrundlage B1 erhalten wird, umfassend:
(B21) 75 bis 80 Gew.-%, bezogen auf die Pfropfhülle B2, von einem Monomer B21 ausgewählt aus der Gruppe bestehend aus Styrol, alpha-Methylstyrol und Mischungen von Styrol und mindestens einem weiteren Monomer ausgewählt aus der Gruppe bestehend aus alpha-Methylstyrol, p-Methylstyrol und C₁-C₈-Alkyl(meth)acrylat- und
(B22) 20 bis 25 Gew.-%, bezogen auf die Pfropfhülle B2, von mindestens einem Monomer B22 ausgewählt aus der Gruppe bestehend aus Acrylnitril und Mischungen von Acrylnitril und mindestens einem weiteren Monomer ausgewählt aus der Gruppe bestehend aus Methacrylnitril, Acrylamid, Methylvinylether, Anhydriden von ungesättigten Carboxylsäuren und Imiden von ungesättigten Carboxylsäuren;
(II) 0 bis 40 Gew.-% von einer oder mehreren Fasern F, bevorzugt Fasern F ausgewählt aus Glasfasern, Carbonfasern, Aramidfasern und basaltischen Fasern, insbesondere Glasfasern, optional umfassend, an ihrer Oberfläche, eine funktionale Gruppe G-I, die kovalente Bindung mit der funktionalen Gruppe M-I von einem Monomer A2 bildet; und
(III) 0 bis 20 Gew.-% von aromatischem Polycarbonat, insbesondere Bisphenol A;
(IV) 0 bis 10 Gew.-% von einem oder mehr weiteren (Co-)Polymeren ausgewählt aus der Gruppe bestehend aus Polyolefinen, Polyestern, Polyamiden, Poly(p-phenylenoxid), Polyphenylensulphid, Poly(methylmethacrylat), Poly(methacrylamid), Styrolmaleinanhydrid, Polyethern, Polyimiden und Polyoxymethylen; und
(V) 0,1 bis 5 Gew.-% von einem oder mehreren Polymeradditiven.

10. Verfahren zum Herstellen eines Polymerteils P gemäß einem der Ansprüche 1 bis 9 umfassend mindestens einen Schritt ausgewählt aus der Gruppe bestehend aus Extrusion einer Platte gefolgt von Thermoformen, Spritzgießen, Rotationsgießen, Extrusionsblasformen, 3D-Drucken, Druckformen, Vakuumformen, Streckformen oder einer Kombination von zwei oder mehr davon.

11. Verfahren zum Schützen eines Windradflügels (W) oder Teils davon durch einen Erosionsschutz umfassend das oder bestehend aus dem Polymerteil P nach einem der Ansprüche 1 bis 9 oder ein/einem Polymerteil P erhältlich aus einem Verfahren nach Anspruch 10, wobei das Verfahren die folgenden Schritte umfasst:
(i) Bestimmen der Dimensionen des zu schützenden Windradflügels (W) oder Teils davon, optional mittels Durchführen eines 3D-Scans;
(ii) Herstellen eines Erosionsschutzes umfassend ein oder bestehend aus einem Polymerteil P nach einem der Ansprüche 1 bis 9 oder ein/einem Polymerteil P erhältlich aus einem Verfahren nach Anspruch 10, das an den Windradflügel (W) oder Teil davon angepasst wird, das die in Schritt (i) bestimmten Dimensionen hat; und
(iii) Anbringen des in Schritt (ii) vorbereiteten Erosionsschutzes am Windradflügel (W) oder einem Teil davon, optional kombiniert mit einem oder mehreren Klebstoffen und/oder durch Kunststoffschweißen; und
(iv) optional Verjüngen oder Verkleiden von ein oder mehreren Kanten und/oder Glätten, Färben und/oder Versiegeln der Oberfläche des Erosionsschutzes.

12. Verfahren zum Reparieren eines Windradflügels (W), wobei das Verfahren die folgenden Schritte umfasst:
(i) Identifizieren eines oder mehrerer beschädigter Anteile eines Windradflügels (W) und optionales Ausschneiden, Schleifen oder Abschleifen von Segmenten, welche die beschädigten Anteile tragen, aus dem Windradflügel (W), wodurch mindestens ein Hohlraum oder eine Kerbe in dem Windradflügel (W) erhalten wird;
(ii) Bedecken oder Füllen des Spots, des Hohlraums, der Kerbe oder der abgesplitterten Kante von Schritt (i) mit einem Polymerteil P gemäß einem der Ansprüche 1 bis 9 oder einem Polymerteil P erhältlich aus einem Verfahren nach Anspruch 10, wobei das Polymerteil P hergestellt wird durch:
(a) ein Ex situ-Verfahren umfassend die folgenden Schritte:
(a-i) Bestimmen der Dimensionen des beschädigten Anteils aus Schritt (i), optional mittels Durchführen eines 3D-Scans;
(a-ii) Herstellen eines Polymerteils P gemäß einem der Ansprüche 1 bis 9 oder eines Polymerteils P erhältlich aus einem Verfahren nach Anspruch 10, das auf oder in den Spot, den Hohlraum, die Kerbe oder die abgesplitterte Kante passt, das die Dimensionen wie in Schritt (a-i) bestimmt aufweist; und
(a-iii) Anbringen des Polymerteils P hergestellt in Schritt (a-ii) an oder in den beschädigten Anteil des Schritts, optional kombiniert mit einem oder mehr Klebstoffen und/oder durch Kunststoffschweißen; oder
(b) ein *In situ* Verfahren umfassend den Schritt des Härtens des Windradflügels (W) mit Schmelze umfassend die Komponenten des Polymerteils P wie in einem der Ansprüche 1 bis 9 definiert, optional mittels Kunststoffschweißen; und
(iii) optional Verjüngen oder Verkleiden einer oder mehrerer Kanten und/oder Glätten, Färben und/oder Versiegeln der Oberfläche des Windradflügels (W) oder des reparierten Teils davon.

13. Verfahren zum Reparieren eines Windradflügels (W), wobei das Verfahren die folgenden Schritte umfasst:
(i) Identifizieren eines zumindest teilweise beschädigten Montageteils eines Windradflügels (W), das ein oder mehr beschädigte Anteile aufweist;
(ii) Entfernen des in Schritt (ii) identifizierten zumindest teilweise beschädigten Montageteils; und
(iii) Ersetzen des entfernten zumindest teilweise beschädigten Montageteils durch entsprechende Montageteile umfassend ein oder bestehend aus einem Polymerteil P gemäß einem der Ansprüche 1 bis 9 oder ein/einem Polymerteil P erhältlich aus einem Verfahren nach Anspruch 10; und
(iv) optional Verjüngen oder Verkleiden einer oder mehrerer Kanten und/oder Glätten, Färben und/oder Versiegeln der Oberfläche des Windradflügels (W) oder des reparierten Teils davon.

14. Windradflügel (W) **gekennzeichnet dadurch, dass** der Windradflügel (W) das Polymerteil P nach einem der Ansprüche 1 bis 9 oder das Polymerteil P erhältlich aus einem Verfahren nach Anspruch 10 umfasst und/oder dadurch, dass er aus einem Verfahren nach einem der Ansprüche 11 bis 13 erhältlich ist.

15. Windrad umfassend einen Windradflügel (W) nach Anspruch 14.

16. Kit K zum Schützen oder Reparieren eines Windradflügels (W), insbesondere gemäß einem Verfahren nach einem der Ansprüche 11 bis 13, wobei der Kit umfasst:
ein Polymerteil P gemäß einem der Ansprüche 1 bis 9 oder ein Polymerteil P erhältlich nach einem Verfahren nach Anspruch 10, das in eine Beschädigung des Windradflügels (W) passt oder eine Formmasse zum Reparieren eines Polymerteils P gemäß einem der Ansprüche 1 bis 9 oder eines Polymerteils P erhältlich aus einem Verfahren nach Anspruch 10, das in den beschädigten Anteil des Windradflügels (W) passt;
optional einen Klebstoff zum Fixieren des Polymerteils P an oder in den Spot, den Hohlraum, die Kerbe oder die abgesplitterte Kante;
optional ein oder mehr Werkzeuge zum Anbringen des Polymerteils P an den zu schützenden oder zu reparierenden Windradflügel (W) ausgewählt aus der Gruppe bestehend aus Trimmscheren, Bürsten, Wischtüchern und Scheuermitteln;
optional einen Behälter, in dem der Kit verpackt ist;
optional einen Behälter, in dem das Polymerteil P transportabel ist;
optional ein oder mehr Mittel zur Oberflächenbehandlung FI ausgewählt aus der Gruppe bestehend aus Farbstoffen, Versiegelungsmitteln und Poliermitteln;
optional ein oder mehr Mittel zum Bestimmen der Größe des Spots, des Hohlraums, der Kerbe oder der abgesplitterten Kante, der/die gefüllt oder bedeckt werden soll; und
optional Gebrauchsanweisung zum Schützen oder Reparieren eines Windradflügels (W), insbesondere Gebrauchsanweisung zum Durchführen eines Verfahrens eines beliebigen der Ansprüche 11 bis 13.

## Revendications

1. Pièce polymère P d'une pale d'éolienne (W) comprenant :
(I) 20 à 100 % en poids d'un composant thermoplastique T comprenant
(A) 10 à 90 % en poids d'au moins une matrice de copolymère thermoplastique A comprenant :
(A1) 50 à 95 % en poids, par rapport à la matrice de copolymère thermoplastique A, d'au moins un monomère AI choisi dans le groupe constitué par le styrène, l'alpha-méthylstyrène et leurs mélanges ; et
(A2) 5 à 50 % en poids, par rapport à la matrice de copolymère thermoplastique A, d'au moins un monomère A2 choisi dans le groupe constitué d'acrylonitrile et de mélanges d'acrylonitrile et d'au moins un autre monomère choisi dans le groupe constitué de méthacrylonitrile, l'acrylamide, l'éther méthylvinylique, les anhydrides d'acides carboxyliques insaturés et les imides d'acides carboxyliques insaturés, où éventuellement un ou plusieurs des monomères A2 peuvent porter un groupe fonctionnel M-I, où le groupe fonctionnel M-I est choisi dans le groupe constitué par les anhydrides d'acides carboxyliques insaturés acides, dérivé de maléimide copolymérisable, tert-butyl-(méth)acrylate et glycidyl(méth)acrylate; et
(B) 10 à 90 % en poids d'au moins un copolymère greffé B comprenant :
(B1) au moins une base de de greffe B1 ayant une température de transition vitreuse Tg inférieure à -20°C, dans laquelle la base de de greffe B1 est obtenue par polymérisation en émulsion et comprend :
(B11) 40 à 100 % en poids, par rapport à la base de de greffe B1, d'au moins un (méth)acrylate d'alkyle en C₁-C₈ comme monomère B11 ;
(B12) 0 à 20 % en poids, par rapport à la base de de greffe B1, d'au moins un monomère réticulant polyfonctionnel B12 ; et
(B13) 0 à 40 % en poids, par rapport à la base de de greffe B1, d'au moins un autre monomère choisi dans le groupe constitué par le styrène, l'alphaméthylstyrène, l'alkylstyrène en C₁-C₄, l'acrylonitrile, le méthacrylonitrile, l'isoprène, le butadiène, le chloroprène, le méthacrylate de méthyle, le di(méth)acrylate d'alkylèneglycol et l'éther méthylvinylique, où la somme de B11, B12 et B13 est égale à 100 % en poids ; et
(B2) au moins une enveloppe de greffe B2 comprenant au moins un monomère B21 obtenu par polymérisation en émulsion, en présence d'au moins une base de de greffe B1 qui comprend :
(B21) 50 à 100 % en poids, par rapport à l'enveloppe de greffe B2, d'un monomère B21 choisi dans le groupe constitué de styrène, d'alpha-méthylstyrène et de mélanges de styrène et d'au moins un autre monomère choisi dans le groupe constitué d'alpha - méthylstyrène, p-méthylstyrène et (méth)acrylate d'alkyle en C₁-C₈ ; et
(B22) 0 à 50 % en poids, par rapport à l'enveloppe de greffe B2, d'au moins un monomère B22 choisi dans le groupe constitué d'acrylonitrile ou de mélanges d'acrylonitrile et d'au moins un autre monomère choisi dans le groupe constitué de méthacrylonitrile, d'acrylamide, l'éther méthylvinylique, les anhydrides d'acides carboxyliques insaturés et les imides d'acides carboxyliques insaturés ;
(II) 0 à 80 % en poids d'une ou plusieurs fibres F, comprenant éventuellement à leur surface, un groupe fonctionnel G-I formant une liaison covalente avec le groupe fonctionnel M-I d'un monomère A2 ;
(III) 0 à 80 % en poids d'un ou plusieurs polycarbonates ;
(IV) 0 à 50 % en poids d'un ou plusieurs autres (co)polymères ; et
(V) 0 à 10 % en poids d'un ou plusieurs additifs polymères.

2. Pièce polymère P selon la revendication 1, où le composant thermoplastique T comprend :
(A) 40 à 90 % en poids, en particulier 50 à 90 % en poids, de la au moins une matrice de copolymère thermoplastique A, comprenant :
(A1) 50 à 95 % en poids, de préférence 60 à 90 % en poids, en particulier 60 à 85 % en poids, par rapport à la masse totale de matrice copolymère A, d'au moins un monomère AI ; et
(A2) 5 à 50 % en poids, de préférence 10 à 40 % en poids, en particulier 15 à 40 % en poids, par rapport à la matrice copolymère A, d'au moins un monomère A2 ; et
(B) 10 à 60 % en poids, en particulier 10 à 50 % en poids, de l'au moins un copolymère greffé B comprenant :
(B1) 50 à 90 % en poids, de préférence 55 à 90 % en poids, en particulier 55 à 65 % en poids, par rapport au copolymère greffé B, d'au moins une base de greffe B1 ; et
(B2) 10 à 50 % en poids, de préférence 10 à 45 % en poids, en particulier 35 à 45 % en poids, par rapport au copolymère greffé B, d'au moins une enveloppe de greffe.

3. Pièce polymère P selon l'une quelconque des revendications 1 ou 2, dans laquelle dans la matrice de copolymère thermoplastique A comprend (ou consiste) en :
(A1) le monomère AI, qui est le styrène ; et
(A2) le ou les monomères A2 sont choisis dans le groupe constitué par l'acrylonitrile et les mélanges d'acrylonitrile et d'anhydrides d'acides carboxyliques insaturés et d'imides d'acides carboxyliques insaturés, de préférence choisis dans le groupe constitué par l'acrylonitrile et les mélanges d'acrylonitrile et d'anhydrides d'acides carboxyliques insaturés les acides carboxyliques, notamment choisis dans le groupe constitué par l'acrylonitrile et les mélanges d'acrylonitrile et d'anhydride maléique.

4. Pièce polymère P selon l'une quelconque des revendications 1 à 3, dans laquelle le copolymère greffé B est caractérisé au moins par l'un des éléments suivants :
la base de greffe B1 comprend :
(B11) 70 à 99,9 % en poids, de préférence 79,9 à 99,5 % en poids, plus préférablement 87,5 à 99 % en poids, par rapport à la base de de greffe B1, d'au moins un (méth)acrylate d'alkyle en C₁-C₈, de préférence choisi parmi l'acrylate de butyle et l'acrylate d'éthylhexyle, en particulier l'acrylate de n-butyle, comme monomère B11 ;
(B12) 0,1 à 10 % en poids, de préférence 0,1 à 5 % en poids, plus préférentiellement 1 à 2,5 % en poids, par rapport à la base de de greffe B1, d'au moins un monomère réticulant polyfonctionnel B12, de préférence choisi dans le groupe constitué par le (méth)acrylate d'allyle, le divinylbenzène, le maléate de diallyle, le fumarate de diallyle, le phtalate de diallyle, le cyanurate de triallyle, l'isocyanurate de tri-allyle et l'acrylate de dicyclopentadiényle (DCPA) ; et
(B13) 0 à 29,5 % en poids, de préférence 0 à 20 % en poids, plus préférablement 0 à 10 % en poids, par rapport à la base de de greffe B1, d'au moins un autre monomère choisi dans le groupe constitué du styrène, alpha-méthylstyrène, alkylstyrène en C₁-C₄, acrylonitrile, méthacrylonitrile, isoprène, butadiène, chloroprène, méthacrylate de méthyle, di(méth)acrylate d'al-kylèneglycol, éther méthylvinylique, où la somme de B11, B12 et B13 est égale à 100 % en poids ; et/ou l'enveloppe de greffe B2 comprend :
(B21) 50 à 95 % en poids, de préférence 65 à 80 % en poids, en particulier 75 à 80 % en poids, par rapport à l'enveloppe de greffe B2, d'un monomère B21 choisi dans le groupe consistant en styrène, alpha - méthylstyrène et mélanges de styrène et d'au moins un autre monomère choisi dans le groupe constitué par l'alpha-méthylstyrène, le p-méthylstyrène et le (méth)acrylate d'alkyle en C₁-C₈ ; et
(B22) 5 à 50 % en poids, de préférence 20 à 35 % en poids, en particulier 20 à 25 % en poids, par rapport à l'enveloppe de greffe B2, d'au moins un monomère B22 choisi dans le groupe consistant en l'acrylonitrile et des mélanges d'acrylonitrile et d'au moins un autre monomère choisi dans le groupe constitué par le méthacrylonitrile, l'acrylamide, l'éther méthylvinylique, les anhydrides d'acides carboxyliques insaturés et les imides d'acides carboxyliques insaturés.

5. Pièce polymère P selon l'une quelconque des revendications 1 à 4, **caractérisée en ce que** :
(a) les fibres F sont choisies parmi les fibres de verre, les fibres de carbone, les fibres d'aramide et les fibres basaltiques, en particulier où les fibres F sont des fibres de verre ; et/ou
(b) le polycarbonate est un polycarbonate aromatique, en particulier un polycarbonate à base de bisphénol A.

6. Pièce polymère P selon l'une quelconque des revendications 1 à 5, dans laquelle la pièce polymère P comprend :
(a) les produits de réaction d'anhydrides d'acides carboxyliques insaturés en tant que groupes fonctionnels M-I du monomère A2 et groupes fonctionnels G-I à la surface des fibres F choisis dans le groupe constitué par les groupes hydroxy, ester et amino qui peuvent réagir avec M-I ; et/ou
(b) comme autre composant (IV) au moins un (co)polymère choisi dans le groupe constitué par les polyoléfines, les polyesters, les polyamides, le poly(oxyde de p-phénylène), le sulfure de polyphénylène, le poly(méthacrylate de méthyle), le poly(méthacrylamide), l'anhydride styrène maléique, les polyéthers, les polyimides et le polyoxyméthylène.

7. Pièce polymère P selon l'une quelconque des revendications 1 à 6, dans laquelle la pièce P comprend :
(I) 40 à 100 % en poids, de préférence 50 à 100 % en poids, en particulier 60 à 99,9 % en poids, d'un composant thermoplastique T;
(II) 0 à 60 % en poids, de préférence 0 à 50 % en poids, en particulier 1 à 40 % en poids, d'une ou plusieurs fibres F ;
(III) 0 à 30 % en poids, de préférence 0 à 25 % en poids, en particulier 0 à 20 % en poids, d'un ou plusieurs polycarbonates ;
(IV) 0 à 30 % en poids, de préférence 0 à 20 % en poids, en particulier 0 à 10 % en poids, d'un ou plusieurs autres (co)polymères ; et
(V) 0 à 10 % en poids, de préférence 0 à 8 % en poids, en particulier 0,1 à 5 % en poids, d'un ou plusieurs additifs polymères.

8. Pièce polymère P selon l'une quelconque des revendications 1 à 7, dans laquelle la pièce polymère P est **caractérisée par** une ou plusieurs des caractéristiques suivantes :
la pièce polymère P est située sur la face externe d'une pale d'éolienne (W);
la pièce polymère P est un bord d'attaque d'une pale d'éolienne (W) ou d'un segment de celle-ci ;
la pièce polymère P est un segment situé dans la moitié d'extrémité d'une pale d'éolienne (W) soumise à une vitesse circulaire élevée lorsque l'éolienne tourne ; la pièce polymère P est un bouclier anti-érosion d'une pale d'éolienne (W) ou d'une partie de celle-ci ;
la pièce polymère P est une pièce d'assemblage préfabriquée remplaçant une pièce d'assemblage endommagée d'une pale d'éolienne (W) ou d'un segment de celle-ci ; la pièce polymère P est une pièce de réparation s'insérant dans une partie endommagée d'une pale d'éolienne (W) préparée ex *situ ;* ou
la pièce polymère P est formée dans ou sur une partie endommagée d'une pale d'éolienne (W) *in situ.*

9. Pièce polymère P selon l'une quelconque des revendications 1 à 8, dans laquelle la pièce P comprend :
(I) 60 à 99,9 % en poids d'un composant thermoplastique T comprenant
(A) 50 à 90 % en poids d'au moins une matrice de copolymère thermoplastique A comprenant :
(A1) 60 à 85 % en poids, par rapport à la masse totale de matrice copolymère thermoplastique A, de styrène ; et
(A2) 15 à 40 % en poids, par rapport à la matrice de copolymère thermoplastique A, d'un monomère A2 choisi dans le groupe constitué par l'acrylonitrile et des mélanges d'acrylonitrile et d'anhydrides d'acides carboxyliques insaturés, dans lequel les anhydrides d'acides carboxyliques insaturés portent une le groupe fonctionnel M-1, en particulier dans lequel A2 est choisi dans le groupe constitué par l'acrylonitrile et les mélanges d'acrylonitrile et d'anhydride maléique ; et
(B) 10 à 50 % en poids d'au moins un copolymère greffé B comprenant
(B1) 50 à 90 % en poids, de préférence 55 à 90 % en poids, en particulier 55 à 65 % en poids, par rapport au copolymère greffé B, d'au moins une base de greffe B1 ayant une température de transition vitreuse Tg inférieure à -200 C qui est obtenue par polymérisation en émulsion comprend :
(B11) 87,5 à 99 % en poids, par rapport à la base de de greffe B1, d'acrylate de butyle, d'acrylate d'éthylhexyle ou d'une combinaison de ceux-ci, en particulier d'acrylate de n-butyle, en tant que monomère B11, en tant que monomère B11 ;
(B12) 1 à 2,5 % en poids, par rapport à la base de de greffe B1, d'au moins un monomère réticulant fonctionnel poly30 B12, de préférence choisi dans le groupe constitué par le (méth)acrylate d'allyle, le divinylbenzène, le maléate de diallyle, le fumarate de diallyle, le phtalate de diallyle, le triallylcyanurate, l'isocyanurate de triallyle et l'acrylate de dicyclopentadiényle (DCPA) ;
(B13) 0 à 10 % en poids, par rapport à la base de de greffe B1, d'au moins un autre monomère choisi dans le groupe constitué par le styrène, l'alphaméthylstyrène, l'alkylstyrène en C₁-C₄, l'acrylonitrile, le méthacrylonitrile, l'isoprène, le butadiène, le chloroprène, le méthacrylate de méthyle, le di(méth)acrylate d'alkylène glycol et l'éther méthylvinylique, où la somme de B11, B12 et B13 est égale à 100 % en poids ; et
(B2) 10 à 50 % en poids, de préférence 10 à 45 % en poids, en particulier 35 à 45 % en poids, par rapport au copolymère greffé B, d'au moins une enveloppe de greffe B2 qui est obtenue par polymérisation en émulsion en présence d'au moins une base de greffe B1 comprend :
(B21) 75 à 80 % en poids, par rapport à l'enveloppe de greffe B2, d'un monomère B21 choisi dans le groupe constitué de styrène, d'alpha-méthylstyrène et de mélanges de styrène et d'au moins un autre monomère choisi dans le groupe constitué d'alpha -méthylstyrène, p-méthylstyrène et (méth)acrylate d'alkyle en C₁-C₈ ; et
(B22) 20 à 25 % en poids, par rapport à l'enveloppe de greffe B2, d'au moins un monomère B22 choisi dans le groupe constitué d'acrylonitrile et de mélanges d'acrylonitrile et d'au moins un autre monomère choisi dans le groupe constitué de méthacrylonitrile, d'acrylamide, l'éther méthylvinylique, les anhydrides d'acides carboxyliques insaturés et les imides d'acides carboxyliques insaturés ;
(II) 0 à 40 % en poids d'une ou plusieurs fibres F, de préférence des fibres F choisies parmi les fibres de verre, les fibres de carbone, les fibres d'aramide et les fibres basaltiques, en particulier les fibres de verre, comprenant éventuellement, à leur surface, un groupement fonctionnel G-I formant une liaison covalente avec le groupe fonctionnel M-I d'un monomère A2 ; et
(III) 0 à 20 % en poids de polycarbonate aromatique, en particulier de bisphénol A ;
(IV) 0 à 10 % en poids d'un ou plusieurs autres (co)polymères choisis dans le groupe constitué par les polyoléfines, les polyesters, les polyamides, le poly(oxyde de p-phénylène), le sulfure de polyphénylène, le poly(méthacrylate de méthyle), le poly( méthacrylamide), styrène anhydride maléique, polyéthers, polyimides et polyoxyméthylène; et
(V) 0,1 à 5 % en poids d'un ou plusieurs additifs polymères.

10. Procédé de préparation d'une pièce en polymère P selon l'une quelconque des revendications 1 à 9 comprenant au moins une étape choisie dans le groupe constitué par l'extrusion d'une feuille suivie d'un thermoformage, d'un moulage par injection, d'un rotomoulage, d'une extrusion soufflage, d'une impression 3D, formage sous pression, formage sous vide, formage sur moule positif, ou une combinaison de deux ou plus de ceux-ci.

11. Procédé de protection d'une pale d'éolienne (W) ou d'une partie de celle-ci par un bouclier anti-érosion comprenant ou consistant en la pièce polymère P selon l'une quelconque des revendications 1 à 9 ou une pièce polymère P pouvant être obtenue à partir d'un procédé selon la revendication 10, ledit procédé comprenant la Etapes suivantes :
(i) déterminer les dimensions de la pale d'éolienne (W) ou d'une partie de celle-ci à protéger, éventuellement au moyen de la réalisation d'un balayage 3D ;
(ii) préparer le bouclier anti-érosion comprenant ou constitué d'une pièce polymère P selon l'une quelconque des revendications 1 à 9 ou d'une pièce polymère P pouvant être obtenue à partir d'un procédé de la revendication 10 s'ajustant sur une pale d'éolienne (W) ou une partie de celle-ci ayant les dimensions déterminées à l'étape (i); et
(iii) monter le bouclier anti-érosion préparé à l'étape (ii) sur une pale d'éolienne (W) ou une partie de celle-ci, éventuellement combiné avec un ou plusieurs adhésifs et/ou au moyen d'un soudage plastique ; et
(iv) éventuellement effiler ou caréner un ou plusieurs bords et/ou lisser, teindre et/ou sceller la surface du bouclier anti-érosion.

12. Procédé de réparation d'une pale d'éolienne (W), ledit procédé comprenant les étapes suivantes :
(i) identifier une ou plusieurs parties endommagées d'une pale d'éolienne (W), et éventuellement découper, meuler ou poncer des segments qui supportent les parties endommagées de la pale d'éolienne (W), obtenant ainsi au moins une cavité ou encoche dans la pale d'éolienne (W);
(ii) recouvrir ou remplir le point, la cavité, l'encoche ou le bord ébréché de l'étape (i) avec une pièce polymère P selon l'une quelconque des revendications 1 à 9 ou une pièce polymère P pouvant être obtenue à partir d'un procédé selon la revendication 10, dans lequel la pièce polymère P est préparé par :
(a) un procédé ex *situ* comprenant les étapes suivantes :
(a-i) déterminer les dimensions de la partie endommagée de l'étape (i), éventuellement au moyen de la réalisation d'un balayage 3D ;
(a-ii) préparer une pièce en polymère P selon l'une quelconque des revendications 1 à 9 ou une pièce en polymère P pouvant être obtenue à partir d'un procédé de la revendication 10 s'ajustant sur ou dans l'endroit, la cavité, l'entaille ou le bord ébréché à remplir ou à recouvrir ayant les dimensions déterminées à l'étape ( a-i); et
(a-iii) monter la pièce polymère P préparée à l'étape (a-ii) sur ou dans la partie endommagée de l'étape, éventuellement combinée avec un ou plusieurs adhésifs et/ou au moyen d'une soudure plastique ; ou alors
(b) un procédé *in situ* comprenant l'étape de durcissement de la pale d'éolienne (W) avec une masse fondue comprenant les composants de la pièce polymère P telle que définie dans l'une quelconque des revendications 1 à 9, éventuellement au moyen d'un soudage plastique ; et
(iii) éventuellement les étapes consistant à effiler ou caréner un ou plusieurs bords et/ou lisser, teindre et/ou sceller la surface de la pale d'éolienne ou de la partie réparée de celle-ci.

13. Procédé de réparation d'une pale d'éolienne (W), ledit procédé comprenant les étapes suivantes :
(i) identifier une pièce d'assemblage au moins partiellement endommagée d'une pale d'éolienne (W) qui porte une ou plusieurs parties endommagées ;
(ii) retirer la pièce d'assemblage au moins partiellement endommagée identifiée à l'étape (ii); et
(iii) remplacer la pièce d'assemblage au moins partiellement endommagée retirée par les pièces d'assemblage respectives comprenant ou consistant en une pièce polymère P selon l'une quelconque des revendications 1 à 9 ou une pièce polymère P pouvant être obtenue à partir d'un procédé de la revendication 10 ; et
(iv) éventuellement les étapes consistant à effiler ou caréner un ou plusieurs bords et/ou lisser, teindre et/ou sceller la surface de la pale d'éolienne (W) ou de la partie réparée de celle-ci.

14. Pale d'éolienne (W) **caractérisée en ce que** ladite pale d'éolienne (W) comprend la pièce polymère P selon l'une quelconque des revendications 1 à 9 ou la pièce polymère P susceptible d'être obtenue à partir d'un procédé selon la revendication 10, et/ou **en ce qu'**elle peut être obtenu à partir d'un procédé selon l'une quelconque des revendications 11 à 13.

15. Eolienne comprenant une pale d'éolienne (W) selon la revendication 14.

16. Kit K de protection ou de réparation d'une pale d'éolienne (W), notamment selon un procédé de l'une quelconque des revendications 11 à 13, ledit kit comprenant :
une pièce polymère P selon l'une quelconque des revendications 1 à 9 ou une pièce polymère P pouvant être obtenue à partir d'un procédé de la revendication 10 s'ajustant dans une partie endommagée de la pale d'éolienne (W), ou une masse à mouler pour préparer une pièce polymère P selon l'une quelconque des revendications 1 à 9 ou une pièce en polymère P pouvant être obtenue à partir d'un procédé de la revendication 10 s'ajustant dans une partie endommagée de la pale d'éolienne (W) ;
éventuellement un adhésif pour fixer la pièce polymère P sur ou dans l'endroit, la cavité, l'entaille ou le bord ébréché;
éventuellement un ou plusieurs outils de montage de la pièce en polymère P sur la pale d'éolienne (W) à protéger ou à réparer choisis dans le groupe constitué par des ciseaux de finition, des brosses, des essuyeurs et des moyens abrasifs ;
éventuellement un récipient dans lequel le kit est conditionné ;
éventuellement un conteneur dans lequel la pièce polymère P est transportable ;
éventuellement un ou plusieurs moyens de finition de surface FI choisi(s) dans le groupe constitué par les colorants, les agents de scellement et les agents de polissage ;
éventuellement un ou plusieurs moyens pour déterminer la taille de l'endroit, de la cavité, de l'entaille ou du bord ébréché à remplir ou à recouvrir ; et
éventuellement des notices d'utilisation pour protéger ou réparer une pale d'éolienne (W), notamment des notices d'utilisation pour la mise en oeuvre d'un procédé selon l'une quelconque des revendications 11 à 13.
